# EUROPEAN PATENT APPLICATION

(11) **EP 4 678 003 A1**
(43) Date of publication of application: **14.01.2026**
(21) Application number: 24382728.4
(22) Date of filing: 08.07.2024
(51) Int. Cl.: A01N 25/00, A01M 7/00

(54) **METHODS AND COMPOSITIONS FOR THE CONTROL IN THE FIELD OF INFECTIOUS DISEASES IN PLANTS**

(71) Applicant: Universitat de Girona, 17071 Girona (ES)
(72) Inventor: Llorente Cabratosa, Isidre, 17003 Girona (ES); Moragrega Garcia, Concepció, 17474 Torroella de Fluvià (ES); Pla de Solà Morales, Maria, 17005 Girona (ES); Nadal Matamala, Anna, 17833 Fontcoberta (ES); Morales Nicolás, Gerard, 08180 Moià (ES); Foix Pericot, Laura, 17243 Llambilles (ES)
(74) Representative: Curell Suñol S.L.P.

(57) **Abstract**

The invention relates to a method for determining an application schedule of a plant defence response eliciting agent, to control a plant disease caused by one or more infectious agents in one or more plants to be treated with said plant defence response eliciting agent. The invention further relates to a phytosanitary composition comprising said plant defence response eliciting agent and uses and methods thereof for the control in the field of a plant disease.

## Description

### Field of the invention

The invention relates to a method for determining an application schedule of a plant defence response eliciting agent, to control a plant disease caused by one or more infectious agents in one or more plants to be treated with said plant defence response eliciting agent. The invention further relates to a phytosanitary composition comprising said plant defence response eliciting agent and uses and methods thereof for the control in the field of a plant disease.

### State of the art

The agricultural industry strongly relies on the production of crops, such as for example stone fruit and almond crops, or tomato and pepper crops. For example, the production of stone fruits and almond crops in Europe and worldwide is very important with an overall production 1.289.500 ha/9.359.000 Mt, and particularly 22.8 Mt of peach and nectarine. Countries like Spain, Italy, France, and Greece are countries with very high production of these crops and their economy relies big in exporting these crops worldwide. Therefore, there is the risk of important economic damages when these corps are affected by plant diseases, such as bacterial and fungal infections. Moreover, these plant diseases are difficult to treat and prevent and can cause serious damage to crop, decreasing yields and increasing costs for producers. Thus, their production is limited, among other factors, by these plant diseases, with bacterial and fungal disease being responsible for the loss of up to 50% of the yields in certain areas. Infections by *Xanthomonas arboricola pv. pruni, Pseudomonas syringae pv. persicae* or *Xylella fastidiosa* are among the worst plant diseases. For example, the bacterial spot disease in stone fruit and almond crops caused by *Xanthomonas arboricola pv. pruni (Xap)* negatively affects the quality of the fruits and the yield of these crops, as it can cause severe leave loss, weaking the trees and progressively decreasing their productivity.

Several strategies are used to avoid the spread of plant infectious agents. For example, to avoid the introduction and spread of *Xap* in Spain, quarantine measures are implemented, which only involve the removal of contaminated material and the detection of the bacteria in propagation material, to detect and eliminate pathogen reservoirs. The control in the field in countries where the disease is already established relies on treatments with, for example, preventive copper derivatives, which show moderate efficacy and are limited in the context of integrated and sustainable agriculture.

Driven, for example, by the European Union with its Directive 2009/128 and the European Green Deal, which aims to reduce the use of phytosanitary products by 50% for the 2030, there is the need to limit the use of chemical active compounds for the protection of crops and reduce the use of chemical phytosanitary products. This requires the development of new products and control strategies founded in sustainability criteria that are effective against the pathogens, and that have a minimal impact on the host plant and the ecosystem. The prevention and control of plant diseases present challenges both for the sustainable production of crops, as mentioned, but also in terms of food safety, as crops will reach the consumer and must therefore remain safe for consumption. In addition, disease control in the field presents its own challenges such as changing meteorological conditions which can affect the efficiency of treatments. This is nowadays even more challenging with the less and less predictable seasonal weather conditions, which affect infections outbreaks and their progression, as well as treatment efficacy, which may lead to an increase in the need of pesticides to ensure, against the above-mentioned trends towards reducing their use. Further, nowadays, there are few phytosanitary products available for the control of bacterial and fungal diseases in crops, particularly in stone fruits, almond, tomato and pepper crops.

Therefore, in this context, there is a clear need to provide solutions to the above-mentioned problems, particularly to facilitate the preventive treatment of plants to control said diseases in the field, while complying with the increasingly restrictive requirements in terms of active compounds, amounts to be used to obtain effective treatments, and the impact that these have on the plants, the ecosystem, and on the final consumer.

### Summary of the invention

It is an object of the invention to provide a method that simplifies the use of multifactorial preventive plant disease control treatments and increases their efficacy, thus allowing to achieve effective control of said plant disease in an economically viable and sustainable manner.

This purpose is achieved by a method of the type indicated at the beginning, characterized in that it comprises the following steps:
[a] obtaining, for a first time interval *t,* preferably said first time interval *t* consisting of *n* consecutive subintervals *tᵢ* wherein *i* is an integer between 1 and *n,* a meteorological first time series, said first time series comprising data of at least one meteorological parameter M over said first time interval *t*, said at least one meteorological parameter *M* being related to a geographical area comprising the area wherein said one or more plants to be treated are located, and preferably said first time series being such that for each subinterval *tᵢ* there is an associated value *Mᵢ* of said at least one meteorological parameter *M*;
[b] determining an infection risk second time series, said second time series comprising data of an infection risk parameter *IR* over said first time interval *t*, said infection risk parameter *IR* corresponding to the risk of infection by said one or more infectious agents and said infection risk parameter *IR* being based on said at least one meteorological parameter *M* of said first time series obtained in step [b], and preferably said second time series being such that for each subinterval *tᵢ* there is an associated value *IRᵢ* of said infection risk parameter *IR*, said value *IRᵢ* corresponding to the risk of infection by said one or more infectious agents determined for said subinterval *tᵢ*;
[c] determining an optimal application schedule for said plant defence response eliciting agent within said first time interval *t*, said optimal application schedule comprising one or more optimal application time intervals *tₐₚₚ,* within said first interval *t* for said plant defence response eliciting agent to be applied to effectively control said plant disease, wherein
each of said one or more optimal application time intervals *t_{app, i}* are determined by the following steps:
[c1] for each subinterval *tᵢ*, determining whether said infection risk parameter *IRᵢ* is equal or above an infection risk threshold *T(IR)* or not;
[c2] for each subinterval *tᵢ* for which said infection risk parameter *IRᵢ* is equal or above said defined infection risk threshold *T(IR)ᵢ,* determining a corresponding optimal application time interval *t_{app, i}* based on the onset of action *Eᵢ*of said plant defence response eliciting agent,
said onset of action *Eᵢ* of said plant defence response eliciting agent corresponding to the time needed by said plant defence response eliciting agent, after being applied to said one or more plants to be treated, to elicit a response in said one or more plants to be treated, and
said onset of action *Eᵢ* of said plant defence response eliciting agent being based on said at least one meteorological parameter *M* of said first time series obtained in step [a].

The method according to the invention allows to dynamically and reliably predict the optimal application schedule of a plant defence response eliciting agent, thus allowing the preventive treatment of plants with said agent infectious diseases. The method according to the invention is particularly well suited for the planning of effective preventive treatments with plant defence eliciting agents. These plant defence eliciting agents work by activating the plants defence mechanisms through often complex molecular pathways which require time, and which can easily be influenced by external factors other than the treating agent and the disease state themselves. This makes it difficult to implement control efficient and effective strategies based on these agents as the timing of the application needs to be precisely adjusted to ensure their maximum efficacy is achieved. On the other hand, plant defence eliciting agents are not well suited to be applied indiscriminately, for example by regular preventive application, both due their mechanism of actions as already explained, but also as they can deeply affect plant metabolism and induce unnecessary stress to the plant, thus negatively impacting yields and overall plant health. On top of that, these plant defence eliciting agents, despite their advantages, are produced at a higher cost than traditional chemical treating agents such as chemical pesticides. Thus, the cost factor becomes more important when implementing control strategies based on them and must be considered. The inventors have found that by using the method according to the invention, the use of plant defence eliciting agents for the control in the field of infectious diseases in plants becomes feasible both in terms of efficacy of the treatment and in terms the cost. Therefore, the method according to the invention enables the implementation of cost-effective, environmentally friendly treatments using plant defence eliciting agents, by maximizing their efficacy, simplifying their implementation, and reducing their costs. The method according to the invention does this by considering both, external factors, such as meteorological parameters that affect the incidence and severity of the plant disease, as well as plant defence response eliciting agent-related factors such as the onset of action of said plant defence response eliciting agent and the effect of said external factors on said onset of action, which are critical factors affecting the efficacy of said preventive treatment.

It is a further object of the invention to provide a computer program comprising instructions which, when the program is executed by a computer, cause the computer to carry out the method for determining an application schedule of a plant defence response eliciting agent according to the invention, and to provide a computer-readable storage medium comprising instructions which, when executed by a computer, cause the computer to carry out the steps of method for determining an application schedule of a plant defence response eliciting agent according to the invention. The computer program according to the invention can be provided in various means, such as any memory support (flash drive, or the like) and/or be stored and made available in the "cloud", that is, to be available for download via a communication network, such as the Internet.

It is another object of the present invention to provide a plant defence response eliciting agent and a phytosanitary composition comprising a plant defence response eliciting agent.

It is another object of the present invention to provide a use of a plant defence response eliciting agent according to the invention for the control in the field of a plant disease in one or more plants.

It is another object of the present invention to provide a use of a phytosanitary composition according to the invention for the control in the field of a plant disease in one or more plants.

It is another object of the present invention to provide a method for the control in the field of a plant disease with at least one plant defence response eliciting agent according to the invention.

It is another object of the present invention to provide a method for the control in the field of a plant disease with a phytosanitary composition according to the invention.

The use and/or the method for the control in the field of a plant disease with a plant defence response eliciting agent according to the invention or with a phytosanitary composition according to the invention allows to effectively control said plant disease in the field, thus reducing the damage caused to plants and reducing the need for applying therapeutic treatments, therefore improving the quality of the agricultural produce, minimizing the environmental impact and the overall cost of crop operations by reducing the use of traditional pesticides.

Preferably, in the use or the method according to the invention said plant defence response eliciting agent or said phytosanitary composition is applied following an optimal application schedule determined by a method according to the invention.

Preferably, the present invention provides a method for the control in the field of a plant disease with at least one plant defence response eliciting agent according to the invention or with a phytosanitary composition according to the invention, said method comprising the steps of:
- determining an optimal application schedule of said at least one plant defence response eliciting agent or of said phytosanitary composition according to the invention, using the method according to the invention; and
- applying said plant defence response eliciting agent or said phytosanitary composition to said one or more plants to be treated at said optimal application time points tₐₚₚ according to said optimal application schedule.

By applying the plant eliciting response agent or the phytosanitary composition according to an optimal application schedule, preventive treatments according to the real in field conditions and timed with periods of maximum risk of infection can be achieved. This allows to reduce the unnecessary cost of systematic treatments, thus maximising the effectiveness of plant disease prevention strategies at a minimum cost.

In the context of the invention, the expression "in the field" and the expression "in-field" are to be understood as "in a real, natural environment, rather than in a theoretical way or in an environment with strictly controlled conditions". For example, in the context of the invention the expression "the control in the field of a plant disease" means that the disease can be controlled in field conditions where plants are subjected to the conditions present in the area, such as meteorological conditions, which cannot be controlled. Also, for example, the expression "in-field trial" means a trial that was performed under real culture conditions of the plants to be treated with variable and uncontrollable meteorological conditions and infection outbreaks. In the context of the invention, while in a preferred embodiment "in the field" is to be understood as "in an open natural environment", the expression "in the field" does not exclude a greenhouse environment where, despite certain conditions being controlled to improve culture performance (e.g. automatic watering replacing precipitation, ventilation, or to a certain degree temperature), plants are subject to fluctuating meteorological conditions and subject to natural infection outbreaks. An example of an environment with strictly controlled conditions which would not be considered "in the field" is an *in vitro* trial in a laboratory setting and with artificially inoculated pathogens simulating infection outbreaks.

In the context of the invention, the expression "for the control of a plant disease" is to be understood as "to prevent the plant disease" and/or "to reduce the incidence of the plant disease" and/or "to delay the onset of the plant disease".

In the context of the invention, the expression "to prevent the plant disease" is to be understood as to avoid the plant disease to occur.

In the context of the invention, the expression "to reduce the incidence of the plant disease" is to be understood as to reduce the negative effects caused by said plant disease.

Any of the following correspond to examples of achieving a reduction of the incidence of the plant disease: reducing the number of plants affected by the disease, and/or reducing the number of lesions in a plant affected by said plant disease, and/or reducing the size of the lesions caused by said plant disease, and/or delaying the onset of the disease, that is by extending the time that said plant disease takes to develop in a plant or in a plantation.

In the context of the invention, the expression "to delay the onset of the plant disease" is to be understood as to delay the time that the disease takes to cause negative effects on the plant or plants. For example, this means to extend the time that said plant disease takes to develop in a plant. The expression "to delay the onset of the plant disease" also means to extend the time that the disease takes to affect a certain number of plants in a plantation. The onset of the disease, for example in any of the mentioned forms, can be quantified in different ways known by a person skilled in the art, examples of which are described below in the Examples. Therefore, in the context of the invention, the expression "controlling said plant disease" is to be understood as having a positive impact in the onset of the disease, preferably in any of the above-mentioned example measures.

It is a further object of the invention to provide a kit comprising a computer program according to the invention and the corresponding plant defence response eliciting agent according to the invention and/or the phytosanitary composition according to the invention.

In the context of the invention, it is to be understood that said kit according to the invention can be provided in the form of said plant defence response eliciting agent according to the invention and/or said phytosanitary composition according to the invention, and instructions on how to download said computer program according to the invention.

The invention further includes several preferred features that are object of the dependent claims and the utility of which will be highlighted hereinafter in the detailed description of preferred embodiments of the invention.

Preferably, the method according to the invention further comprises the step of:
[b1] obtaining a third time series, said third time series comprising data of at least one plant defence response eliciting agent-related parameter *C_{EA}*,
said third time series being such that each subinterval *tᵢ* has an associated value *C_{EA,i}* for said at least one parameter *C_{EA}*; and in that

in step [c], said onset of action *Eᵢ* of said plant defence response eliciting agent and/or said optimal application time points *t_{app, i}* are adjusted depending on said at least one parameter *C_{EA}*.

In this preferred embodiment of the method according to the invention, step [b1] allows to take into account specific plant defence response eliciting agent conditioning factors, or specific plant defence response eliciting agent-related parameters, that affect the efficacy of the treating agent, preferably in the field, and to adjust the optimal application time intervals accordingly.

Preferably, said plant defence response eliciting agent-related parameter is a plant defence response eliciting agent-related meteorology-dependent parameter *C_{EA,M},* said parameter *C_{TA,M}* corresponding to a parameter related to said plant defence response eliciting agent that depends on one or more of said meteorological parameters *M* of said first time series obtained in step [a]. In a further preferred embodiment, said plant defence response eliciting agent-related meteorology-dependent parameter *C_{EA,M}* is based on temperature, relative humidity, precipitation, and/or risk of precipitation. In another further preferred embodiment, said plant defence response eliciting agent-related meteorology-dependent parameter *C_{EA,M}* is a parameter related the eliciting effect of the plant defence response eliciting agent based on temperature, relative humidity, precipitation, and/or risk of precipitation.

In a preferred embodiment, said onset of action E;of said plant defence response eliciting agent and/or said optimal application time intervals are adjusted based on whether said at least one plant defence response eliciting agent-related parameter *C_{EA}* is below, equal, or above one or more thresholds. The parameters *C_{EA}* and *C_{EA,M}* may also be parameters for which one or more thresholds are determined. This allows to adjust the optimal application schedule based on discrete conditions, rather than continuous variables. For example, it may be useful to define thresholds when the plant defence response eliciting agent (EA) conditioning factor or plant defence response eliciting agent -related parameter *C_{EA}* is, for example, the time of the year in which the method according to the invention is used and in which the infectious disease is to be controlled.

Preferably, said onset of action *Eᵢ* of said plant defence response eliciting agent and/or said optimal application time intervals *t_{app, i}* are adjusted based on whether said at least one plant defence response eliciting agent -related parameter *C_{EA}* is below, equal, or above a defined threshold T(*C_{EA}*).

Preferably, said parameter *C_{EA}*, more preferably said plant defence response eliciting agent-related meteorology-dependent parameter *C_{EA,M},* is a persistency parameter *P_{EA}*, said parameter *P_{EA}* corresponding to a parameter related to the persistency time of said plant defence response eliciting agent on said one or more plants to be treated.

In the context of the invention, a persistency parameter *P_{EA}*, is a parameter related to the persistency time of said plant defence response eliciting agent on said one or more plants to be treated. Using as a persistency parameter P_{EA} is particularly useful to account for said plant defence response eliciting agent being lost, for example due to certain meteorological conditions, or due to other factors such as the nature of the plant defence response eliciting agent itself, which may degrade and lose efficacy over time. Including said parameter in the method according to the invention allows to account for this and thus improve the accuracy of the prediction and the efficacy of the preventive treatment when said application schedule is determined taking into account said persistency parameter combined with said at least one meteorological parameter.

The method according to the invention further allows the treatment application schedule to be easily and dynamically updated according to changes in one or more of the considered variables, thus minimising the number of ineffective treatments and minimizing overall the use of said treating agents, while maximizing the efficacy of the overall treatment and reducing its cost and its environmental impact. This results in an improved efficacy of the treatments and a lower cost. This not only allows to implement automatization tasks for said treatments, but also results in more efficient and cost-effective plant disease control strategies using plant defence response eliciting agents to effectively control infectious diseases in plants thus minimizing the need of therapeutic treatments.

Preferably, said at least one meteorological parameter *M* of said first time series obtained in step [a] is
a meteorological parameter measured at said geographical area for said first time interval *t,* preferably for each subinterval *tᵢ*, or
a meteorological parameter predicted at said geographical area for said first time interval *t,* preferably for each subinterval *tᵢ*, or
a meteorological parameter measured at said geographical area for some subintervals *tᵢ*, and a meteorological parameter predicted at said geographical area for the remaining subintervals *tᵢ*.

In this preferred embodiment of the method according to the invention, obtaining one or more meteorological parameters measured at said geographical area for said first time interval, or for at least one of said subintervals *tᵢ*, allows to obtain an optimal application schedule which will be more accurate than, for example, an optimal application schedule obtained from meteorological parameters predicted for said first time interval and/or for at least one of said subintervals *tᵢ* for said geographical area. When the meteorological conditions measured in said geographical area are considered and are incorporated into the method, the accuracy of the optimal application schedule determination increases. In another preferred embodiment of the method according to the invention, using one or more meteorological parameters predicted for said first time interval and for said geographical area allows to anticipate meteorological conditions that can occur and influence the appearance and/or the progression of said infectious disease, thus allowing the method to take them into account when determining the optimal application schedule. In a further preferred embodiment of the method according to the invention, using a combination of measured and predicted meteorological parameters allows to obtain the benefits of both. In this further preferred embodiment, the accuracy of method and thus, the efficacy of the resulting treatments are maximized, thus resulting in a further improved outcome in terms of disease control.

Preferably, said at least one meteorological parameter *M* is selected from the group consisting of temperature, relative humidity, precipitation, and risk of precipitation.

Preferably, said first time interval *t* is 7 days and each subinterval *tᵢ* is 1 day.

Defining a first time interval of 7 days is advantageous as it provides a good compromise between providing an application schedule with sufficient forecasting power, that is, allowing to plan the application of the treating agent with enough anticipation, and providing accurate optimal application timepoints that will ensure an improved efficiency of the treating agent and minimize potentially ineffective applications, thus improving the efficacy of the treatment and reducing its cost.

Preferably, the method for determining an application schedule of a plant defence response eliciting agent according to the invention is a computer-implemented method.

Preferably, said plant defence response eliciting agent comprises or consists of at least one plant elicitor peptide and/or at least a fusion peptide, said fusion peptide comprising a plant elicitor peptide sequence and an affinity purification tag sequence, said affinity purification tag sequence being located at the N-terminal end of said fusion peptide.

Preferably, said plant defence response eliciting agent comprises or consists of at least one plant elicitor peptide. More preferably, said at least plant elicitor peptide is a plant elicitor peptide originating from the plant to be treated or a plant elicitor peptide comprising a sequence having an identity or a similarity of at least 50% with the sequence of said plant elicitor peptide originating from the plant to be treated.

Plant elicitor peptides as plant defence response eliciting agents for the control in the field of infectious disease in plants present several advantages, linked both to the nature of the plant elicitor peptides themselves and to the mechanisms of actions that these have. On the one hand, these elicitor peptides work by activating the plants defence mechanisms. Further, elicitor peptides are biodegradable and do not last long on the plants, thus maximising their safety profile and making them suitable for human and animal consumption. Further their effect is limited in time thus having a minimal environmental impact. Further, as shown below, the production of plant elicitor peptides though biotechnological means, i.e. recombinant expression, can be scaled up thus making their use economically viable while remaining environmentally friendly, in contrast to traditional bioactive chemicals.

Preferably, said plant defence response eliciting agent comprises or consists of at least a fusion peptide, said fusion peptide comprising a plant elicitor peptide sequence and an affinity purification tag sequence, said affinity purification tag sequence being located at the N-terminal end of said fusion peptide. More preferably, said plant elicitor peptide sequence is a plant elicitor peptide sequence originating from the plant to be treated or a plant elicitor peptide sequence with an identity or a similarity of at least 50% with the sequence of said plant elicitor peptide originating from the plant to be treated.

Preferably, said plant defence response eliciting agent comprises or consists of a plant elicitor peptide selected from the group consisting of:
a peptide comprising the amino acid sequence SEQ ID N° 1,
a peptide comprising the amino acid sequence SEQ ID N° 2,
a peptide comprising the amino acid sequence SEQ ID N° 5,
a peptide comprising the amino acid sequence SEQ ID N° 6,
a peptide comprising the amino acid sequence SEQ ID N° 7,
a peptide comprising the amino acid sequence SEQ ID N° 9,
a peptide comprising the amino acid sequence SEQ ID N° 10,
a peptide comprising the amino acid sequence SEQ ID N° 11,
a peptide comprising the amino acid sequence SEQ ID N° 12,
a peptide comprising the amino acid sequence SEQ ID N° 13,
a peptide comprising the amino acid sequence SEQ ID N° 14,
a peptide comprising the amino acid sequence SEQ ID N° 15,
a peptide comprising the amino acid sequence SEQ ID N° 16,
a peptide comprising the amino acid sequence SEQ ID N° 17,
a peptide comprising the amino acid sequence SEQ ID N° 18,
a peptide comprising the amino acid sequence SEQ ID N° 19,
a peptide comprising the amino acid sequence SEQ ID N° 20,
a peptide comprising the amino acid sequence SEQ ID N° 21,
a peptide comprising the amino acid sequence SEQ ID N° 22,
a peptide comprising the amino acid sequence SEQ ID N° 23,
a peptide comprising the amino acid sequence SEQ ID N° 24,
a peptide comprising a sequence with an identity or a similarity of at least 50% to any of said sequences SEQ ID N° 1, SEQ ID N° 2, SEQ ID N° 5, SEQ ID N° 6, SEQ ID N° 7, and SEQ ID N° 9 to SEQ ID N° 24 and that has a plant defence eliciting function,
and a mixture of any of said plant elicitor peptides.

Preferably, said plant defence response eliciting agent comprises or consists of a fusion peptide comprising or consisting of:
- a plant elicitor peptide selected from the group consisting of:
   a peptide comprising the amino acid sequence SEQ ID N° 1,
   a peptide comprising the amino acid sequence SEQ ID N° 2,
   a peptide comprising the amino acid sequence SEQ ID N° 5,
   a peptide comprising the amino acid sequence SEQ ID N° 6,
   a peptide comprising the amino acid sequence SEQ ID N° 7,
   a peptide comprising the amino acid sequence SEQ ID N° 9,
   a peptide comprising the amino acid sequence SEQ ID N° 10,
   a peptide comprising the amino acid sequence SEQ ID N° 11,
   a peptide comprising the amino acid sequence SEQ ID N° 12,
   a peptide comprising the amino acid sequence SEQ ID N° 13,
   a peptide comprising the amino acid sequence SEQ ID N° 14,
   a peptide comprising the amino acid sequence SEQ ID N° 15,
   a peptide comprising the amino acid sequence SEQ ID N° 16,
   a peptide comprising the amino acid sequence SEQ ID N° 17,
   a peptide comprising the amino acid sequence SEQ ID N° 18,
   a peptide comprising the amino acid sequence SEQ ID N° 19,
   a peptide comprising the amino acid sequence SEQ ID N° 20,
   a peptide comprising the amino acid sequence SEQ ID N° 21,
   a peptide comprising the amino acid sequence SEQ ID N° 22,
   a peptide comprising the amino acid sequence SEQ ID N° 23,
   a peptide comprising the amino acid sequence SEQ ID N° 24, and
   a peptide comprising a sequence with an identity or a similarity of at least 50% to any of said sequences SEQ ID N° 1, SEQ ID N° 2, SEQ ID N° 5, SEQ ID N° 6, SEQ ID N° 7, and SEQ ID N° 9 to SEQ ID N° 24 and that has a plant defence eliciting function; and
- an affinity purification tag sequence located at the N-terminal end of said plant elicitor peptide,
or a mixture of any of said fusion peptides.

Examples of said fusion peptides include peptides consisting of the amino acid sequence SEQ ID N° 3, SEQ ID N° 4, or SEQ ID N° 8.

For any of the methods, uses and compositions according to the invention herein described, plant defence response eliciting agent comprising or consisting of the peptides comprising or consisting of a fusion peptide, wherein peptides are such that no cleavage if said affinity purification tag sequence from the final active has been performed, are unexpectedly active and particularly advantageous. The production and purification said fusion peptides, for example, via expression and culture of a host microorganism such as *E. coli* and the use of affinity chromatography without the need of a last step of cleaving the affinity tag, is a simpler and more cost/effective way to obtain them, thus resulting in an active peptide at a lower cost. It is even more surprising that an affinity tag, such as for example GST, which is much larger in size than the elicitor peptide itself, does not interfere with the plant defence eliciting function of the elicitor peptide domain.

Said fusion peptides comprising a plant elicitor peptide sequence and an affinity purification tag sequence according to the invention can be obtained using methods known by the skilled person, such as cloning in an expression vector and expressing the resulting construct in a suitable host, some of which are described below in the Examples. As plant defence eliciting domain of the fusion peptide, that is as the domain with a plant defence eliciting function, any plant elicitor peptide or C-terminal portion thereof can be used as long as the corresponding plant receptor binding domain of said plant elicitor is conserved in the C-terminal domain of fusion peptide and/or the plant defence eliciting function of the fusion peptide obtained is conserved.

The plant elicitor peptides comprising any of the sequences of the Pep motifs described in table S1 of Ruiz *et al.* 2018 (https://doi.org/10.1186/s12863-017-0593-4) and described in the accompanying sequence listing as SEQ ID N° 1, SEQ ID N° 2, SEQ ID N° 5, SEQ ID N° 6, SEQ ID N° 7, and SEQ ID N° 9 to SEQ ID N° 24 are preferred as plant elicitor peptides according to the invention and as plant defence eliciting domains in fusion peptides according to the invention.

Preferably, said affinity purification tag sequence is a GST affinity purification tag sequence corresponding to the first 220 amino acids of SEQ ID N° 3. Other affinity purification tag sequences that are suitable to be fused at the N-terminal end of the plant elicitor peptide sequences and facilitate purification of the resulting fusion peptide can be used. Examples of these other affinity purification tag sequences include epitope tags like Histidine (His) tags, HA tags, and protein/domain tags like a Maltose binding protein (MBP) tag or a calmodulin binding protein (CBP) tag. The skilled person knows both how to choose these sequences and how to purify peptides using them.

In preferred embodiments of the invention, said plant defence response eliciting agent is a modified plant elicitor peptide, for example a biotinylated plant elicitor peptide obtained by biotinylating any of the above-mentioned elicitor peptides to allow its purification using streptavidin. Other similar systems of chemically modifying peptides to facilitate purification, are also considered, although they would require a further functionalizing step after production in comparison with the fusion peptides according to the invention.

As mentioned, for all preferred embodiments of the invention independently, plant elicitor peptides having an identity or a similarity preferably of at least 50%, 55%, 60%, 65%, 70%, 75%, or 80% and more preferably of at least 85% to any of said sequences SEQ ID N° 1, SEQ ID N° 2, SEQ ID N° 5, SEQ ID N° 6, SEQ ID N° 7, and SEQ ID N° 9 to SEQ ID N° 24, and that have a plant defence eliciting function are also preferred as plant defence response eliciting agents. Sequences having said identity or similarity can be used plant defence response eliciting agent according to the invention and as plant defence eliciting domain for said fusion peptide according to the invention. Said degree of variability can be obtained by the skilled person with known genetic engineering and molecular biology methods, such as the ones described below in the Examples. The skilled person known how to determine if a plant elicitor peptide has a plant eliciting function. This can be done for example, though tests such as the ones shown in the Examples provided below. For examples, sequences with the preferred degree of variability and having a plant defence eliciting function that are envisaged and considered encompassed by the invention are sequences wherein the C-terminal domain of the reference elicitor peptide is conserved and/or conserves its binding activity to the corresponding plant receptor, such as the plant defence eliciting function of the peptide is conserved.

The degree of identity or similarity of at least two peptides can be determined with algorithms or calculation methods for determining which are available to the person skill in the art, such as for example BLAST (Basic Local Alignment Search Tool).

More preferably said plant defence response eliciting agent comprises or consists of at least one selected from the group consisting of:
- a peptide comprising the amino acid sequence SEQ ID N° 1, a peptide comprising the amino acid sequence SEQ ID N° 2, a peptide comprising the amino acid sequence SEQ ID N° 3, a peptide comprising the amino acid sequence SEQ ID N° 4, a peptide comprising the amino acid sequence SEQ ID N° 7, a peptide comprising the amino acid sequence SEQ ID N° 8, a peptide comprising the amino acid sequence SEQ ID N° 12, a peptide comprising the amino acid sequence SEQ ID N° 13;
- a peptide having an identity or a similarity preferably of at least 50%, 55%, 60%, 65%, 70%, 75%, or 80% and more preferably of at least 85% to any of said sequences SEQ ID N° 1, SEQ ID N° 2, SEQ ID N° 3, SEQ ID N° 4, SEQ ID N° 7, SEQ ID N° 8, SEQ ID N° 12, and SEQ ID N° 13;
- a fusion peptide, said fusion peptide comprising a plant elicitor peptide sequence selected from the group consisting of: SEQ ID N° 1, SEQ ID N° 2, SEQ ID N° 7, SEQ ID N° 12, and SEQ ID N° 13; and an affinity purification tag sequence located at the N-terminal end of said plant elicitor peptide; and
- a mixture thereof.

For the purposes of completeness and to facilitate understanding the following correspondences in nomenclature apply: SEQ ID N° 1 corresponds to the sequence of PpPep1, SEQ ID N° 2 corresponds to the sequence of PpPep2, SEQ ID N° 3 corresponds to the sequence GST-PpPep1, SEQ ID N° 4 corresponds to the sequence GST-PpPep2, SEQ ID N° 5 corresponds to the consensus sequence PpPep1, PpPep2, *Amygdaleae,* SEQ ID N° 7 corresponds to the sequence SIPep6, SEQ ID N° 8 corresponds to the sequence GST-SIPep6, SEQ ID N° 12 corresponds to the sequence MdPep3, and SEQ ID N° 13 corresponds to the sequence MdPep4.

In a further preferred embodiment, said plant defence response eliciting agent comprises at least one selected from the group consisting of:
a peptide comprising the amino acid sequence SEQ ID N° 1,
a peptide comprising the amino acid sequence SEQ ID N° 2,
a peptide comprising the amino acid sequence SEQ ID N° 3,
a peptide comprising the amino acid sequence SEQ ID N° 4,
a peptide comprising the amino acid sequence SEQ ID N° 5,
a peptide comprising a sequence with an identity or a similarity of at least 50% to any of said sequences SEQ ID N° 1, SEQ ID N° 2, SEQ ID N° 3, and SEQ ID N° 4, and that has a plant defence eliciting function,
and mixture thereof.

Using a plant defence response eliciting agent comprising at least one selected from the group consisting of a peptide comprising the amino acid sequence SEQ ID N° 1 (sequence PpPep1), a peptide comprising the amino acid sequence SEQ ID N° 2 (sequence PpPep2), a peptide comprising the amino acid sequence SEQ ID N° 3 (sequence GST-PpPep1), a peptide comprising the amino acid sequence SEQ ID N° 4 (sequence GST-PpPep2), a peptide comprising the amino acid sequence SEQ ID N° 5 (consensus sequence PpPep1, PpPep2, *Amygdaleae),* and/or identical or similar sequences with a plant defence eliciting function, and/or mixtures thereof, is advantageous, preferably for plants of the genus *Prunus,* as the inventors have found and shown that these peptides are plant elicitor peptides that are particularly efficient at activating the plant defences in plants of this genus under in-field conditions, and for controlling in the field the progression of infectious diseases in plants, preferably of bacterial spot disease, thus reducing the use of traditional pest control chemicals.

Preferably, said onset of action E of said plant defence response eliciting agent is comprised in the interval between 1 day and 7 days.

Preferably, said plant defence response eliciting agent comprises one selected from the group consisting of
- a peptide comprising the amino acid sequence SEQ ID N° 1,
- a peptide comprising the amino acid sequence SEQ ID N° 3,
- a peptide comprising a sequence with an identity or a similarity of at least 50%, 55%, 60%, 65%, 70%, 75%, 80% and especially preferably of at least 85% to any of said sequences SEQ ID N° 1 and SEQ ID N° 3 and that has a plant defence eliciting function,
- a fusion peptide, said fusion peptide comprising:
   a plant elicitor peptide sequence selected from the group consisting of SEQ ID N° 1 and a sequence with an identity or a similarity of at least 50%, 55%, 60%, 65%, 70%, 75%, 80% and especially preferably of at least 85%, to SEQ ID N° 1 and that has a plant defence eliciting function, and
   an affinity purification tag sequence located at the N-terminal end of said plant elicitor peptide, and
- a mixture thereof; and
said onset of action E₁ of said plant defence response eliciting agent is comprised in the interval between 5 day and 7 days.

Preferably, said plant defence response eliciting agent comprises one selected from the group consisting of
- a peptide comprising the amino acid sequence SEQ ID N° 2,
- a peptide comprising the amino acid sequence SEQ ID N° 4,
- a peptide comprising a sequence with an identity or a similarity of at least 50%, 55%, 60%, 65%, 70%, 75%, 80% and especially preferably of at least 85% to any of said sequences SEQ ID N° 2 and SEQ ID N° 4 and that has a plant defence eliciting function,
- a fusion peptide, said fusion peptide comprising:
   a plant elicitor peptide sequence selected from the group consisting of SEQ ID N° 2 and a peptide comprising a sequence with an identity or a similarity of at least 50%, 55%, 60%, 65%, 70%, 75%, 80%, and especially preferably of at least 85%, to SEQ ID N° 2 and that has a plant defence eliciting function; and
   an affinity purification tag sequence located at the N-terminal end of said plant elicitor peptide; and
- a mixture thereof; and
said onset of action E₂ of said plant defence response eliciting is comprised in the interval between 1 day and 2 days.

Preferably, the method for the control in the field of a plant disease with a plant defence response eliciting agent according to the invention is a method to control a plant disease with at least two plant defence response eliciting agents, wherein step [i] is performed for each defence response eliciting agent to obtain a specific optimal application schedule with specific optimal application time points t_{app, P} for of each defence response eliciting agents, and wherein in step [ii] each defence response eliciting agent is applied at said corresponding specific optimal application time points t_{app, P} according to said corresponding specific optimal application schedule, respectively obtained in step [i].

Preferably, for any of the methods, and uses according to the invention herein described, two plant defence response eliciting agents showing complementary and/or synergistic effects, or two phytosanitary compositions each comprising or consisting of said plant defence response eliciting agent according to the invention showing complementary and/or synergistic effects are considered.

Preferably, said at least two defence response eliciting agents comprise respectively a first plant defence response eliciting agent and a second plant defence response eliciting agent,
said first defence response eliciting agents comprising at least one selected from the group consisting of:
   - a first plant elicitor peptide selected from the group consisting of:
      a peptide comprising the amino acid sequence SEQ ID N° 1, and
      a peptide comprising a sequence with an identity or a similarity of at least 50%, 55%, 60%, 65%, 70%, 75%, 80% and especially preferably of at least 85% to SEQ ID N° 1 and that has a plant defence eliciting function,
   - a fusion peptide comprising said first elicitor peptide and an affinity purification tag sequence located at the N-terminal end of said first plant elicitor peptide,
      a peptide comprising the amino acid sequence SEQ ID N° 3, and
      a mixture thereof; and
said onset of action E_{P1} of said first defence response eliciting agent being comprised in the interval between 5 days and 7 days; and
said second defence response eliciting agent comprising at least one selected from the group consisting of:
   - a second plant elicitor peptide selected from the group consisting of:
      a peptide comprising the amino acid sequence SEQ ID N° 2, and
      a peptide comprising a sequence with an identity or a similarity of at least 50%, 55%, 60%, 65%, 70%, 75%, 80% and especially preferably of at least 85% to SEQ ID N° 2 and that has a plant defence eliciting function,
   - a fusion peptide comprising said second elicitor peptide and an affinity purification tag sequence located at the N-terminal end of said second plant elicitor peptide,
   - a peptide comprising the amino acid sequence SEQ ID N° 4, and
   - a mixture thereof; and
said onset of action E_{P2} of said second defence response eliciting agent is being comprised in the interval between 1 day and 2 days.

In a preferred embodiment of the method according to the invention, said plant disease is bacterial spot.

Preferably, said plant disease is bacterial spot. The inventors have shown that eliciting a plant response using the invention is particularly advantageous to control bacterial spot disease in crops.

Preferably, said one or more infectious agents comprises a bacterium of the genus *Xanthomonas,* preferably a bacterium *Xanthomonas arboricola,* more preferably a bacterium *Xanthomonas arboricola pv. pruni.*

The inventors have shown that eliciting a plant response using the invention is preferably advantageous when said one or more infectious agents comprises a bacterium of the genus *Xanthomonas,* preferably a bacterium *Xanthomonas arboricola,* more preferably a bacterium *Xanthomonas arboricola pv. pruni.* Therefore, these preferred embodiments for any aspect of the invention allow to obtain an improved control in the field of infections *by Xanthomonas sp.* thus to reducing the use of traditional pesticides and improving crop yields in sustainable manner.

Any of the aspects of the invention is preferably advantageous when said one or more plants to be treated are fruit stone and almond crops. More preferably, the method according to the invention is further advantageous when said one or more plants to be treated are plants of the genus *Prunus.*

In a further preferred embodiment of the method according to the invention, said plant defence response eliciting agent comprises or consists of at least one selected from the group consisting of:
- a peptide comprising the amino acid sequence SEQ ID N° 1, a peptide comprising the amino acid sequence SEQ ID N° 2, a peptide comprising the amino acid sequence SEQ ID N° 3, a peptide comprising the amino acid sequence SEQ ID N° 4, a peptide comprising the amino acid sequence SEQ ID N° 5,
- a peptide comprising a sequence with an identity or a similarity of at least 50%, 55%, 60%, 65%, 70%, 75%, 80% and especially preferably of at least 85%, to any of SEQ ID N° 1 and SEQ ID N° 2 and that has a plant defence eliciting function,
- a fusion peptide, said fusion peptide comprising a plant elicitor peptide sequence selected from the group consisting of: SEQ ID N° 1, SEQ ID N° 2, SEQ ID N° 5, a sequence with an identity or a similarity of at least 50%, 55%, 60%, 65%, 70%, 75%, 80%, and more preferably of at least 85%, to any of SEQ ID N° 1 and SEQ ID N° 2 and that has a plant defence eliciting function, and an affinity purification tag sequence located at the N-terminal end of said plant elicitor peptide,
- and mixture thereof;
and said one or more plants to be treated are plants of the genus *Prunus,* and said plant disease is bacterial spot, preferably, wherein said plant disease is caused by a bacterium of the genus *Xanthomonas,* more preferably a bacterium *Xanthomonas arboricola,* even more preferably a bacterium *Xanthomonas arboricola pv. pruni.*

In crops of the genus *Prunus* and particularly against bacterial spot disease, the plant defence eliciting agents comprising plant elicitor peptides comprising the sequences SEQ ID N° 1, SEQ ID N° 2, and related sequences with a plant defence eliciting function have been shown to provide an advantageous effect in the control in the field of the disease, reducing fruit and leave damage in a sustainable way and without the need for traditional pesticides.

Preferably, said plant defence response eliciting agent is applied to said one or more plants to be treated by surface treatment, preferably by broadcast application and/or foliar spray, or by root treatment, preferably by irrigation, more preferably by drip irrigation, or by trunk injection.

Likewise, the invention also includes other features of detail illustrated in the detailed description of several embodiments of the invention.

### Brief description of the drawings:

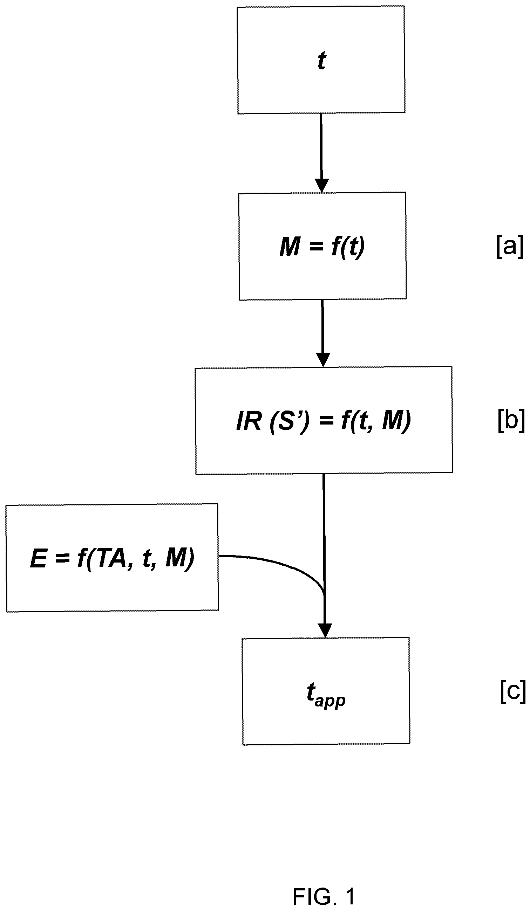

Figure 1 shows a schematical representation of a first embodiment of the method according to the invention.

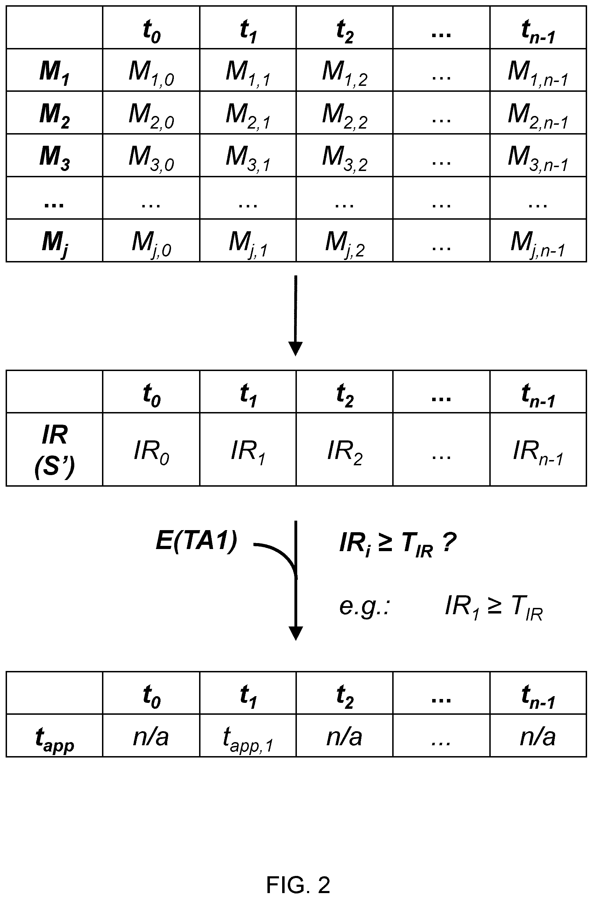

Figure 2 shows a schematical representation of the input data, the decision algorithm, and the output data of a first embodiment of the method according to the invention.

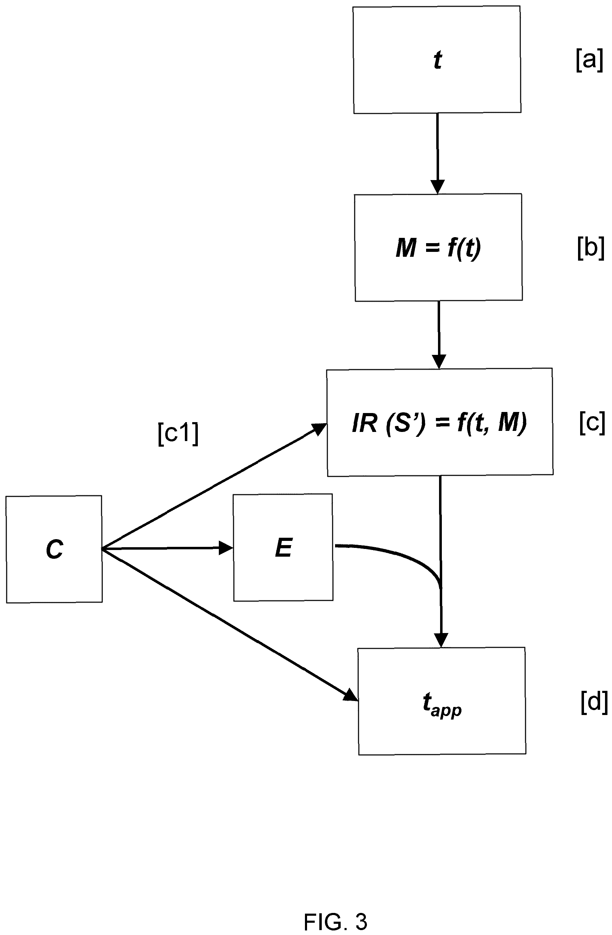

Figure 3 shows a schematical representation of a second embodiment of the method according to the invention.

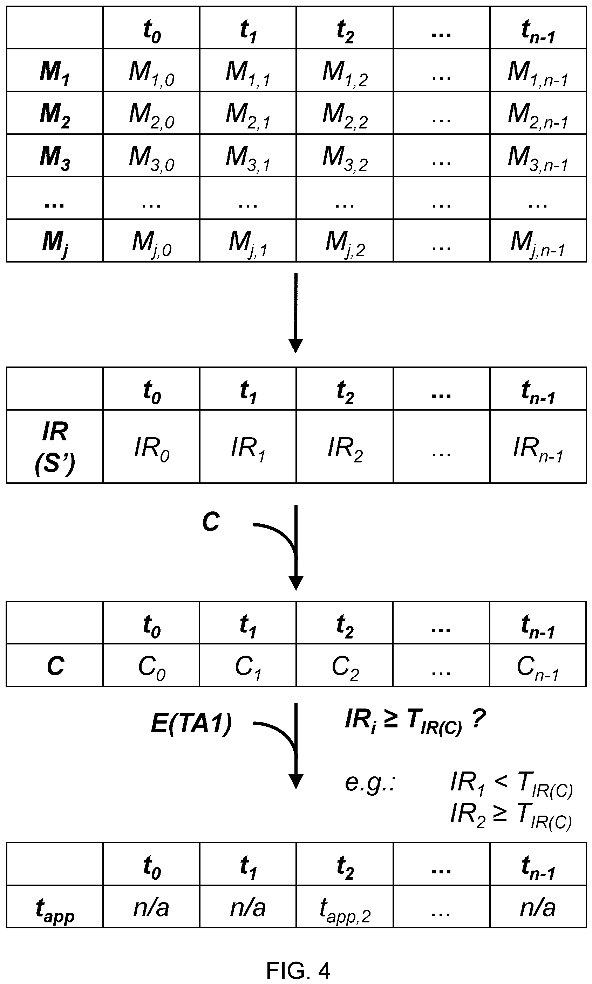

Figure 4 shows a schematical representation of the input data, the decision algorithm, and the output data of a second embodiment of the method according to the invention.

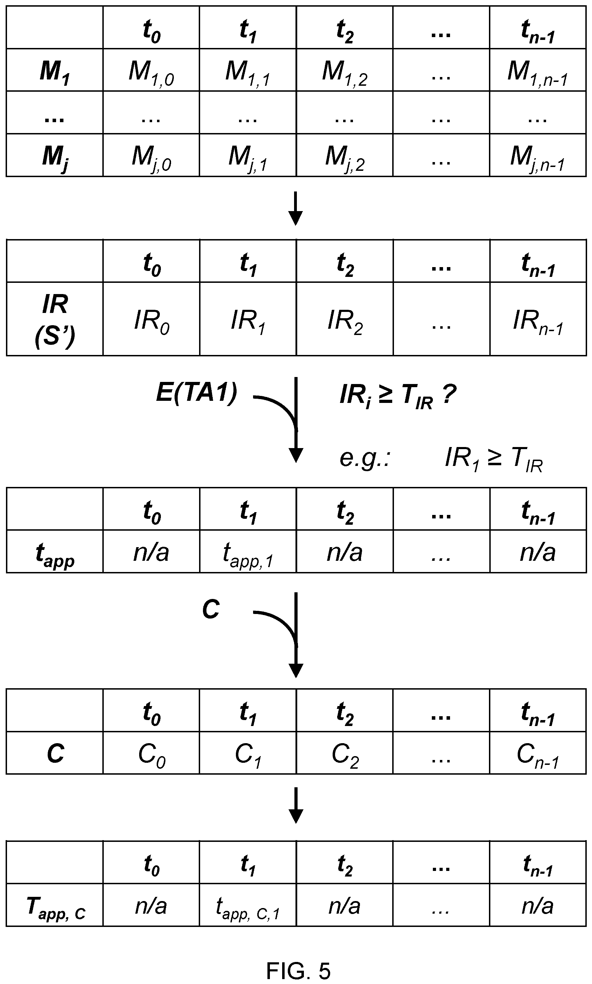

Figure 5 shows a schematical representation of the input data, the decision algorithm, and the output data of a third embodiment of the method according to the invention.

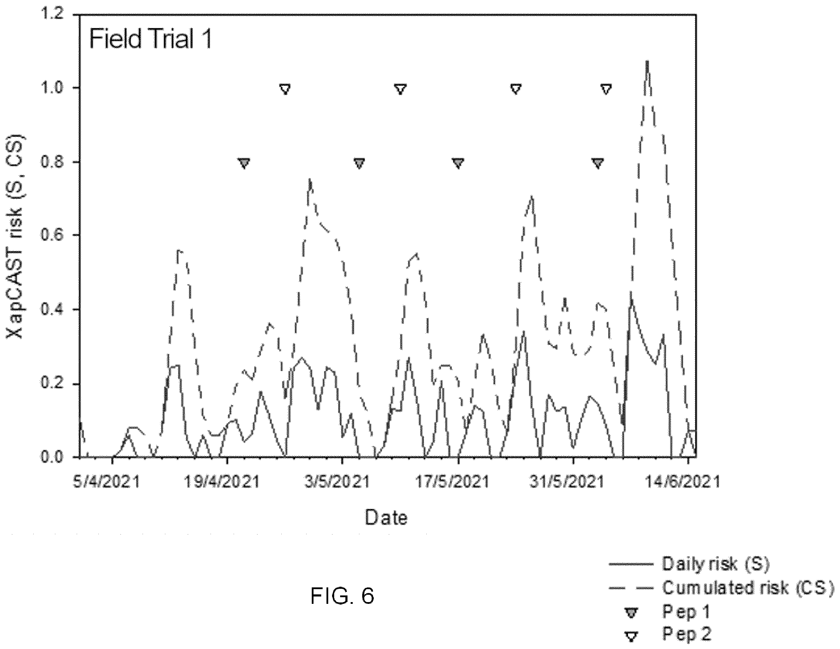

Figure 6 shows a graphical representation of the risk dynamics and the optimal application for treatments with GST-PpPep1 and GST-PpPep2 determined, and applied, with the methods according to the invention during the field trial 1.

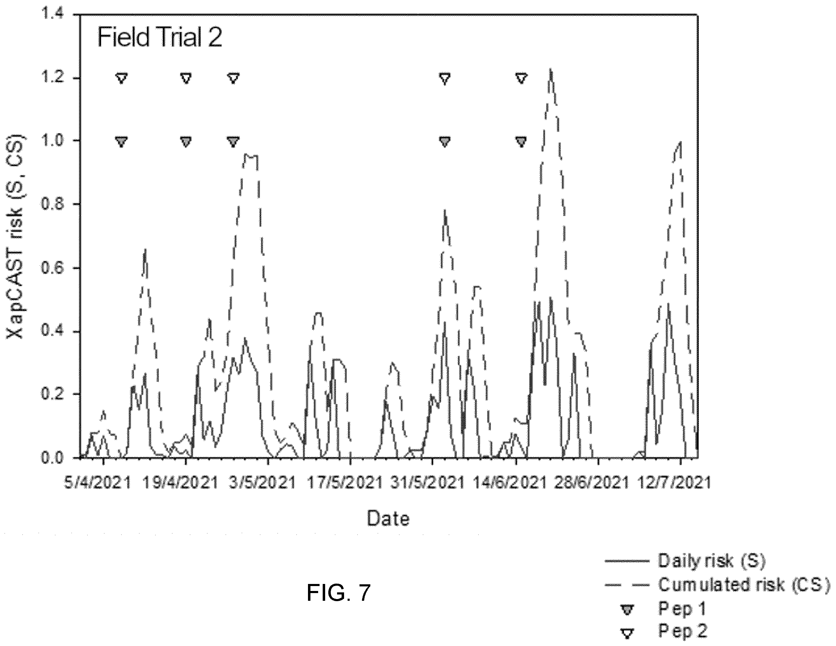

Figure 7 shows a graphical representation of the risk dynamics and the optimal application for treatments with GST-PpPep1 and GST-PpPep2 determined, and applied, with the methods according to the invention during the field trial 2.

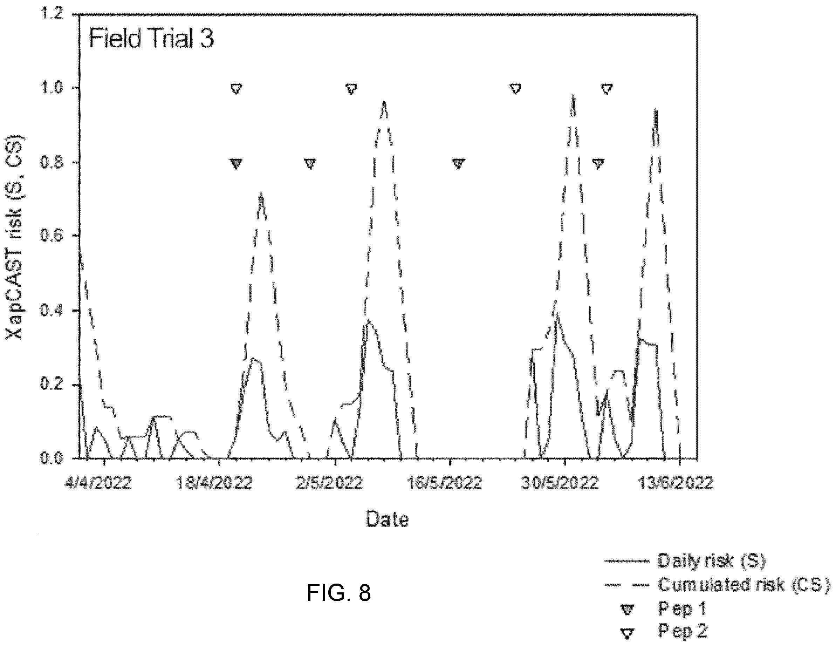

Figure 8 shows a graphical representation of the risk dynamics and the optimal application for treatments with GST-PpPep1 and GST-PpPep2 determined, and applied, with the methods according to the invention during the field trial 3.

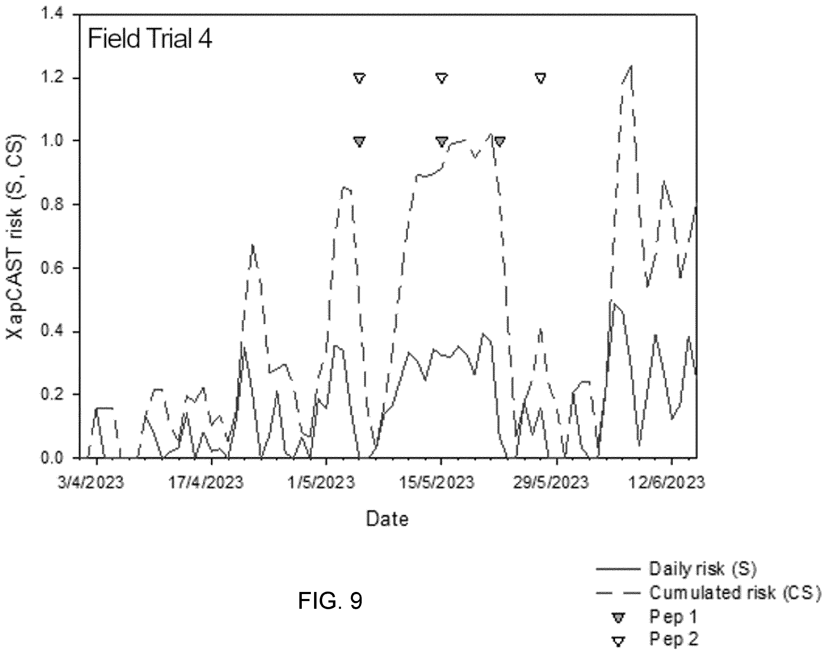

Figure 9 shows a graphical representation of the risk dynamics and the optimal application for treatments with GST-PpPep1 and GST-PpPep2 determined, and applied, with the methods according to the invention during the field trial 4.

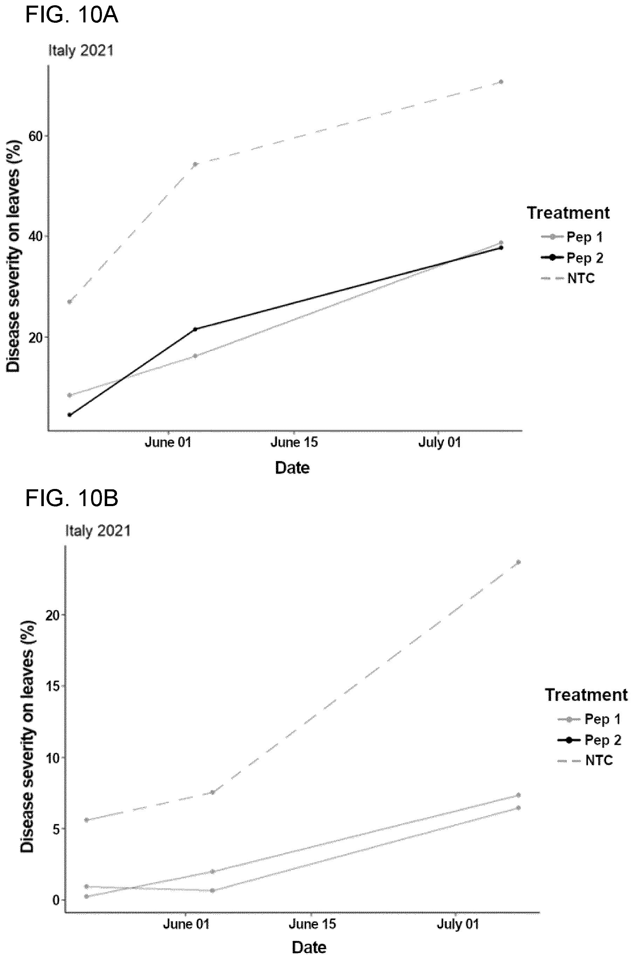

Figure 10 shows a graphical representation of the evolution of disease incidence (A) and disease severity (B) for each treatment (GST-PpPep1, GST-PpPep2 and NTC) during the Field trial 1.

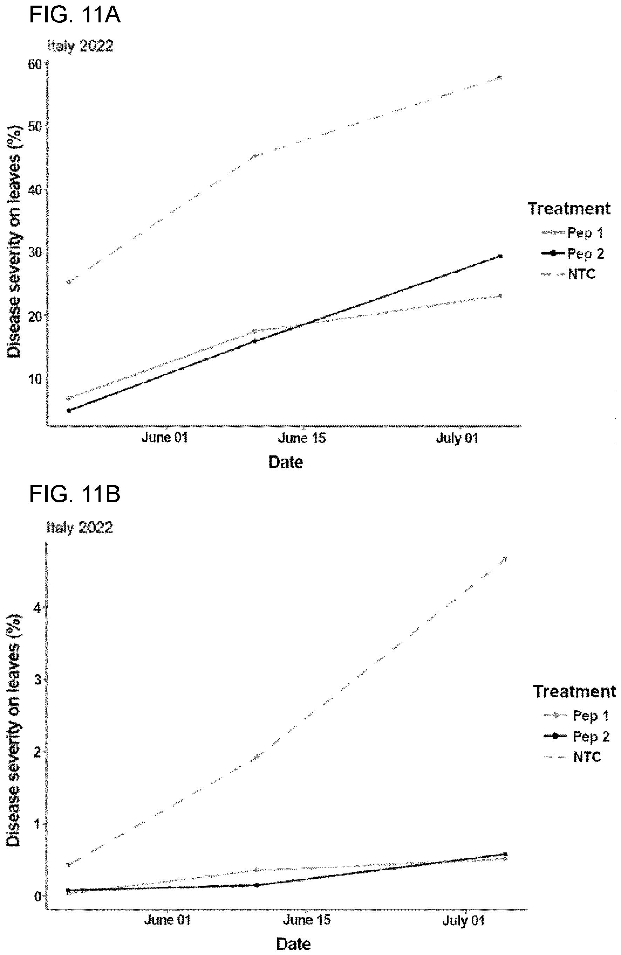

Figure 11 shows a graphical representation of the evolution of disease incidence (A) and disease severity (B) for each treatment (GST-PpPep1, GST-PpPep2 and NTC) during the Field trial 2.

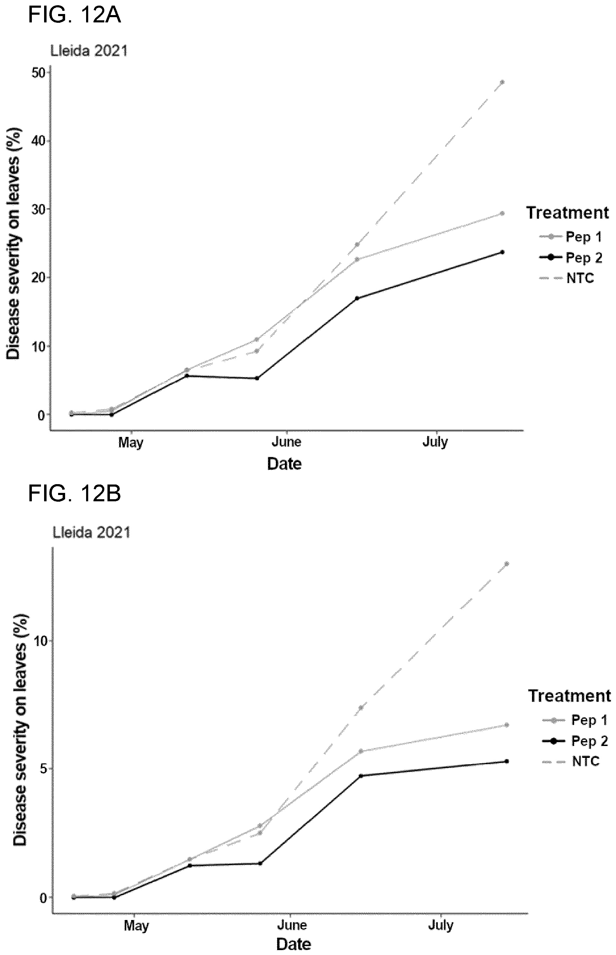

Figure 12 shows a graphical representation of the evolution of disease incidence (A) and disease severity (B) for each treatment (GST-PpPep1, GST-PpPep2 and NTC) during the Field trial 3.

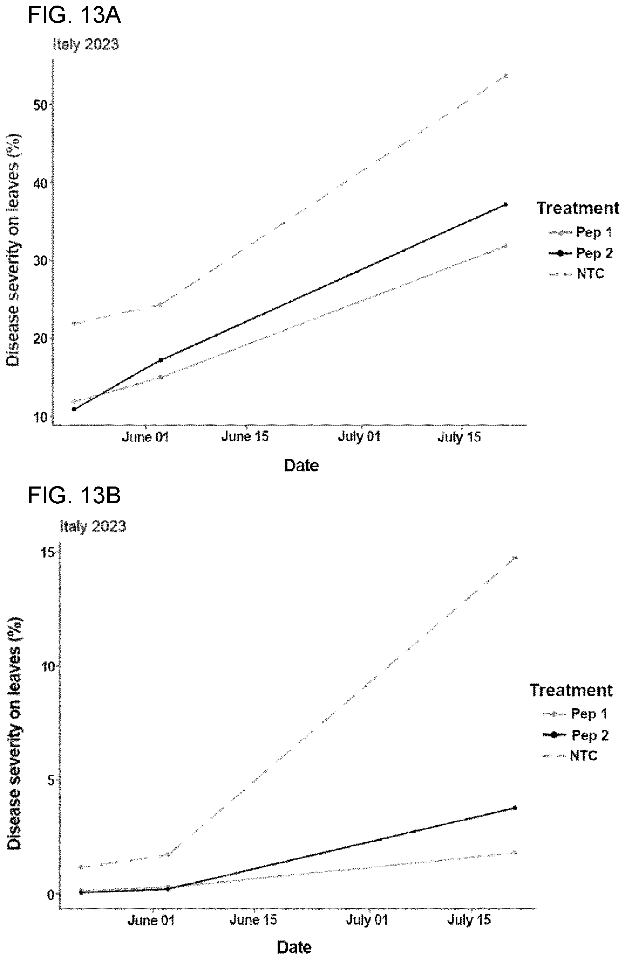

Figure 13 shows a graphical representation of the evolution of disease incidence (A) and disease severity (B) for each treatment (GST-PpPep1, GST-PpPep2 and NTC) during the Field trial 4.

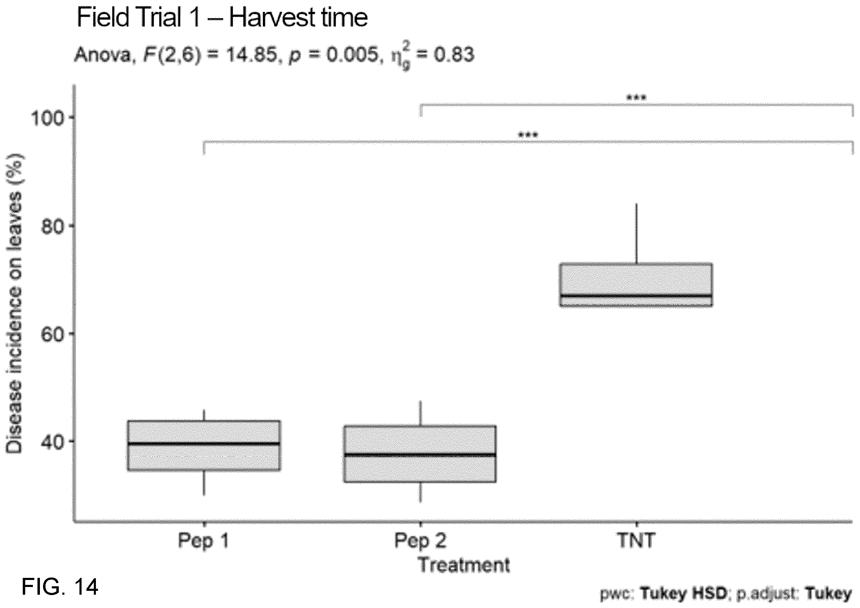

Figure 14 shows a graphical representation of the effect of the application of peptides GST-PpPep1 (Pep1) and GST-PpPep2 (Pep2) versus a No-Treatment control (NTC) on the disease incidence in leaves corresponding to the field trial 1. Data was obtained at the end of the field trail and corresponded to the disease incidence measured at the time of harvest. Box plots, variance analysis and mean comparison using the Tukey HSD test (P<0.05) are shown for each treatment.

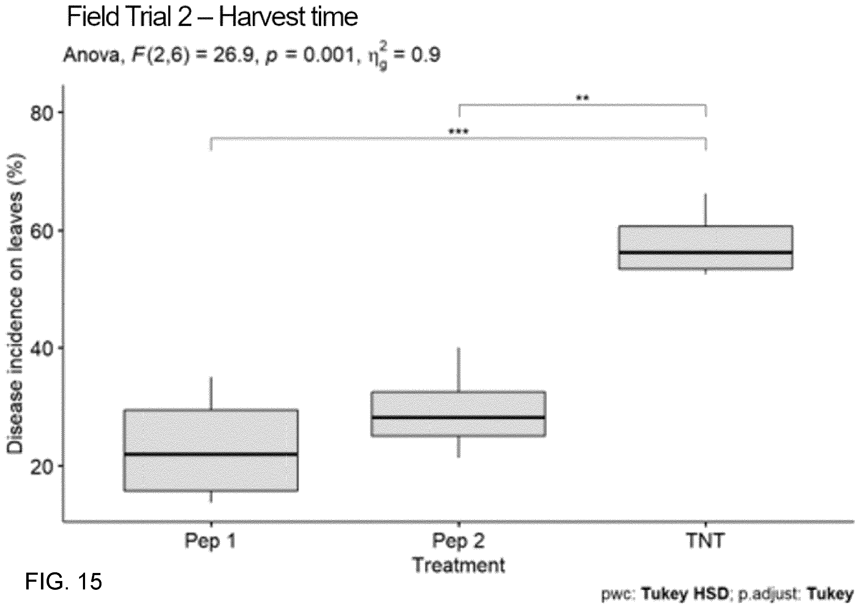

Figure 15 shows a graphical representation of the effect of the application of peptides GST-PpPep1 (Pep1) and GST-PpPep2 (Pep2) versus a No-Treatment control (NTC) on the disease incidence in leaves corresponding to the field trial 2. Data was obtained at the end of the field trail and corresponded to the disease incidence measured at the time of harvest. Box plots, variance analysis and mean comparison using the Tukey HSD test (P<0.05) are shown for each treatment.

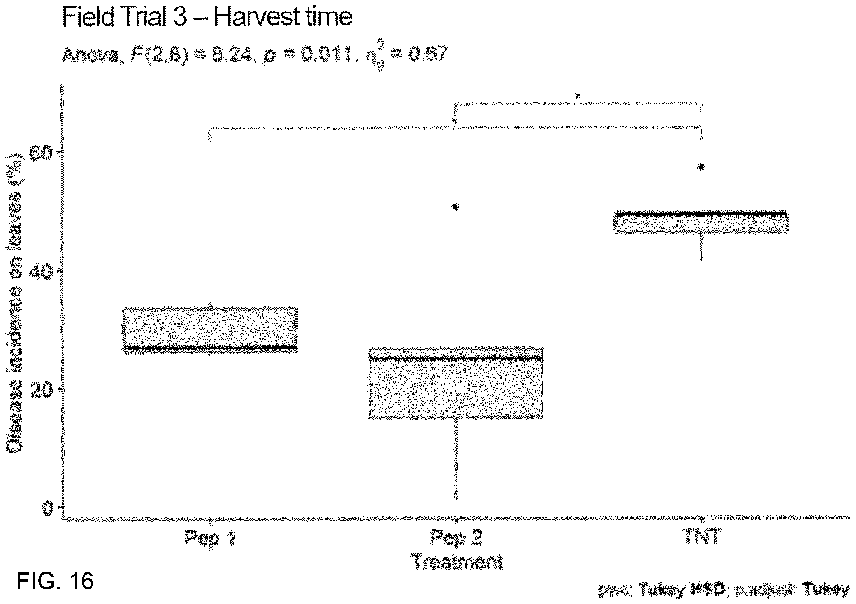

Figure 16 shows a graphical representation of the effect of the application of peptides GST-PpPep1 (Pep1) and GST-PpPep2 (Pep2) versus a No-Treatment control (NTC) on the disease incidence in leaves corresponding to the field trial 3. Data was obtained at the end of the field trail and corresponded to the disease incidence measured at the time of harvest. Box plots, variance analysis and mean comparison using the Tukey HSD test (P<0.05) are shown for each treatment.

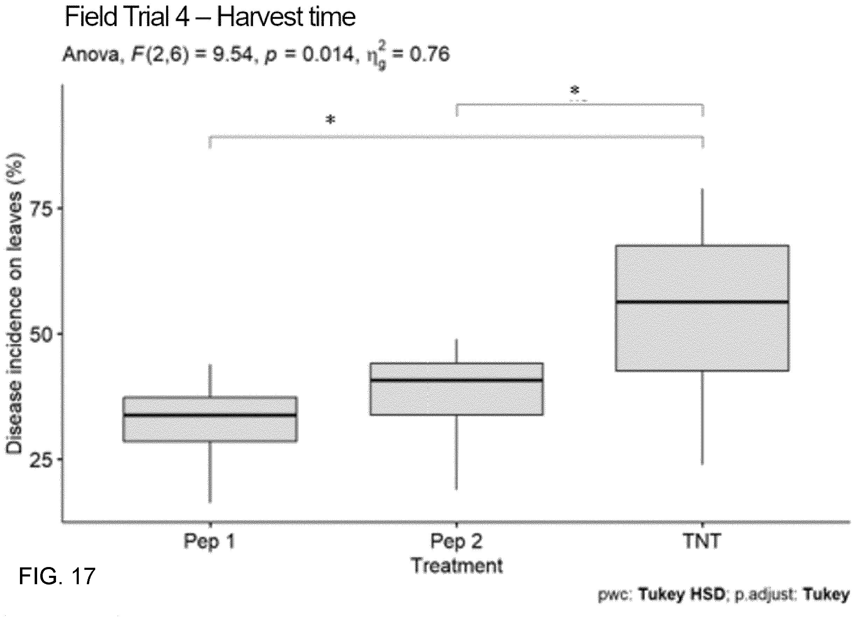

Figure 17 shows a graphical representation of the effect of the application of peptides GST-PpPep1 (Pep1) and GST-PpPep2 (Pep2) versus a No-Treatment control (NTC) on the disease incidence in leaves corresponding to the field trial 4. Data was obtained at the end of the field trail and corresponded to the disease incidence measured at the time of harvest. Box plots, variance analysis and mean comparison using the Tukey HSD test (P<0.05) are shown for each treatment.

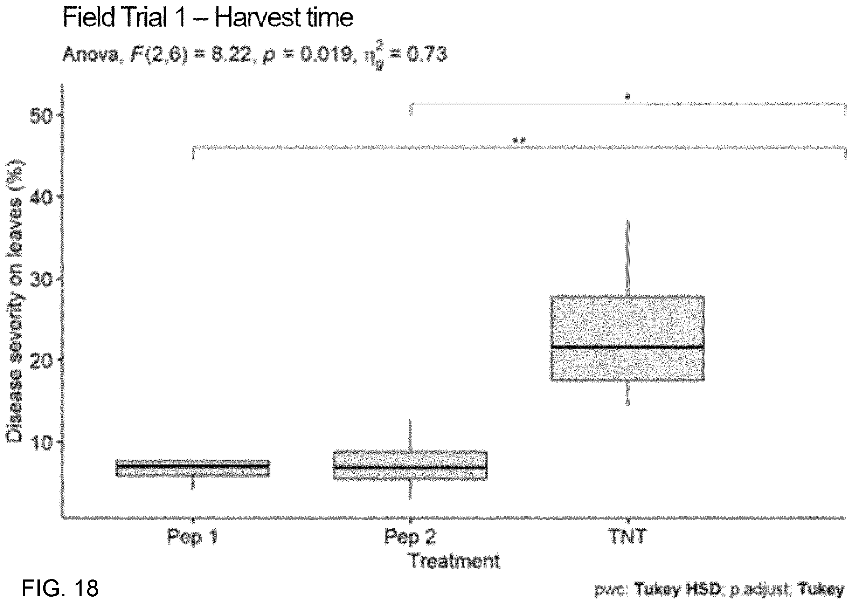

Figure 18 shows a graphical representation of the effect of the application of peptides GST-PpPep1 (Pep1) and GST-PpPep2 (Pep2) versus a No-Treatment control (NTC) on the disease severity in leaves corresponding to the field trial 1. Data was obtained at the end of the field trail and corresponded to the disease severity measured at the time of harvest. Box plots, variance analysis and mean comparison using the Tukey HSD test (P<0.05) are shown for each treatment.

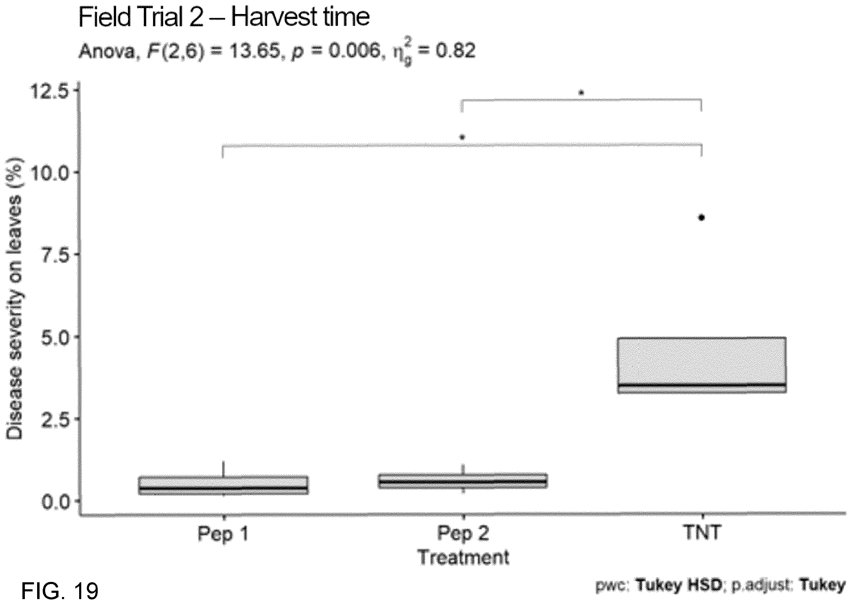

Figure 19 shows a graphical representation of the effect of the application of peptides GST-PpPep1 (Pep1) and GST-PpPep2 (Pep2) versus a No-Treatment control (NTC) in the disease severity in leaves corresponding to the field trial 2. Data was obtained at the end of the field trail and corresponded to the disease severity measured at the time of harvest. Box plots, variance analysis and mean comparison using the Tukey HSD test (P<0.05) are shown for each treatment.

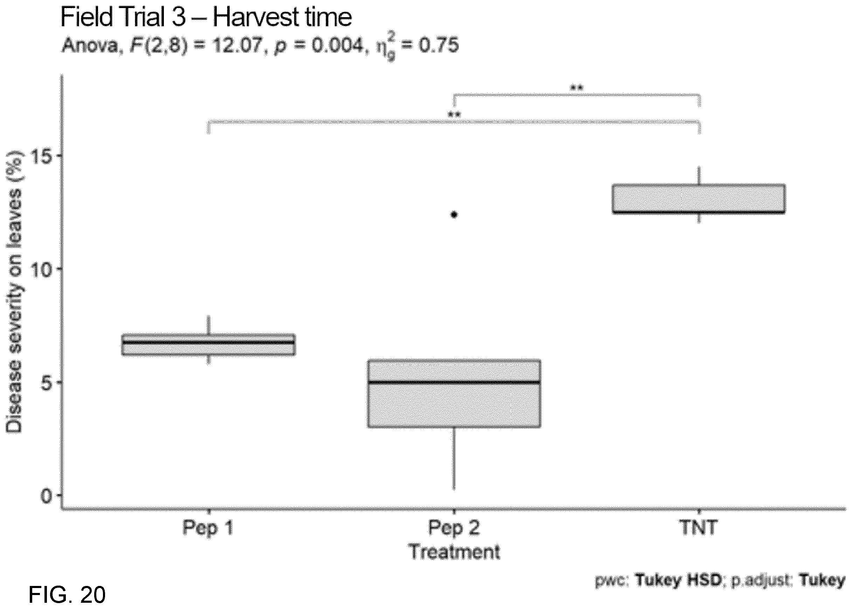

Figure 20 shows a graphical representation of the effect of the application of peptides GST-PpPep1 (Pep1) and GST-PpPep2 (Pep2) versus a No-Treatment control (NTC) in the disease severity in leaves corresponding to the field trial 3. Data was obtained at the end of the field trail and corresponded to the disease severity measured at the time of harvest. Box plots, variance analysis and mean comparison using the Tukey HSD test (P<0.05) are shown for each treatment.

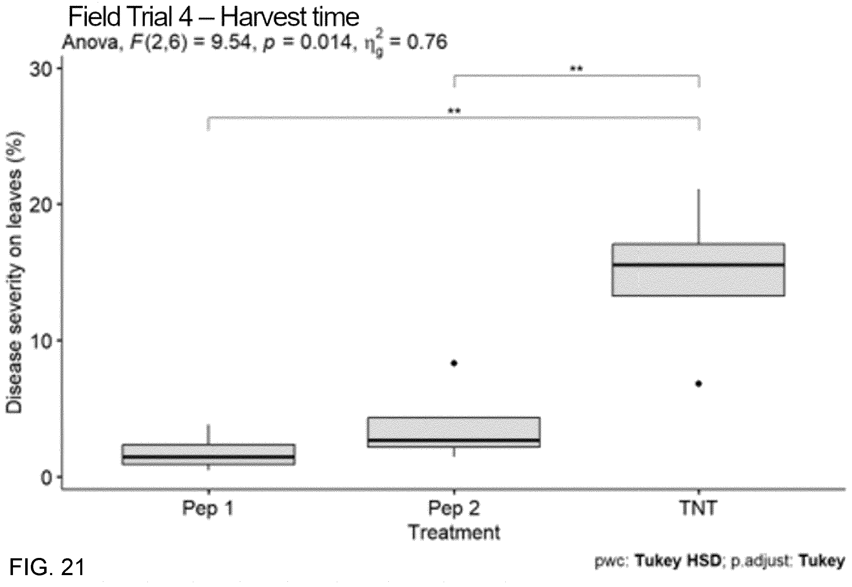

Figure 21 shows a graphical representation of the effect of the application of peptides GST-PpPep1 (Pep1) and GST-PpPep2 (Pep2) versus a No-Treatment control (NTC) in the disease severity in leaves corresponding to the field trial 4. Data was obtained at the end of the field trail and corresponded to the disease severity measured at the time of harvest. Box plots, variance analysis and mean comparison using the Tukey HSD test (P<0.05) are shown for each treatment.

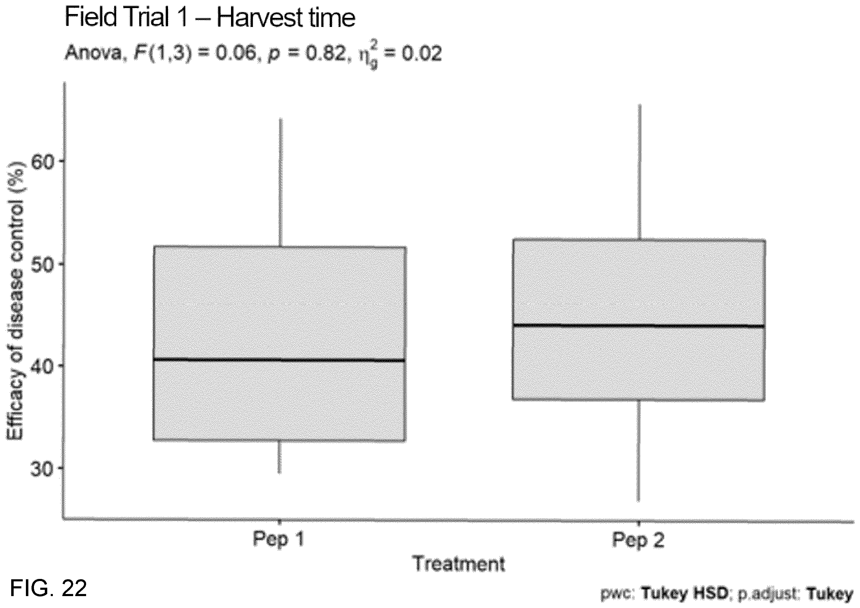

Figure 22 shows a graphical representation of the effect of the application of peptides GST-PpPep1 (Pep1) and GST-PpPep2 (Pep2) versus a No-Treatment control (NTC) on the efficacy of disease control corresponding to the field trial 1. Data was obtained at the end of the field trail and corresponded to the efficacy of disease control measured at the time of harvest. Box plots, variance analysis and mean comparison using the Tukey HSD test (P<0.05) are shown for each treatment.

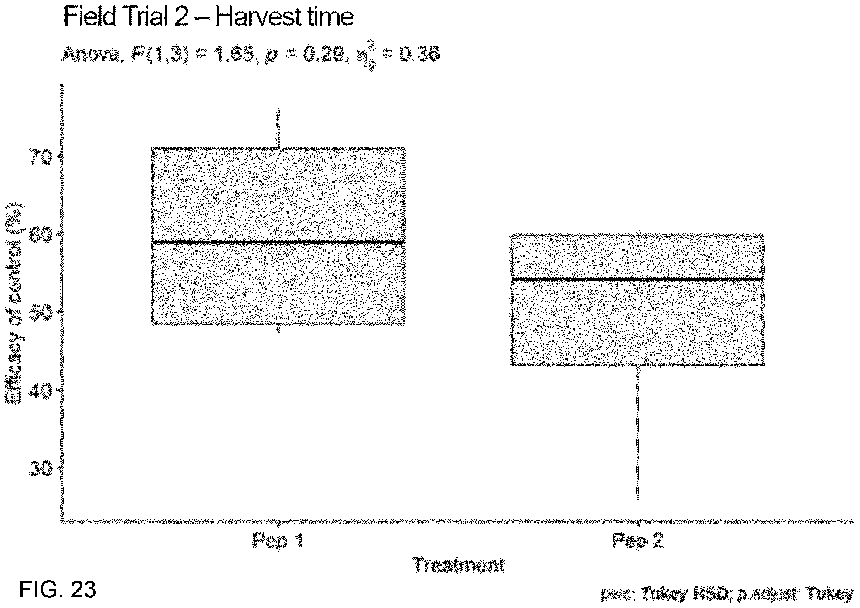

Figure 23 shows a graphical representation of the effect of the application of peptides GST-PpPep1 (Pep1) and GST-PpPep2 (Pep2) versus a No-Treatment control (NTC) on the efficacy of disease control corresponding to the field trial 2. Data was obtained at the end of the field trail and corresponded to the efficacy of disease control measured at the time of harvest. Box plots, variance analysis and mean comparison using the Tukey HSD test (P<0.05) are shown for each treatment.

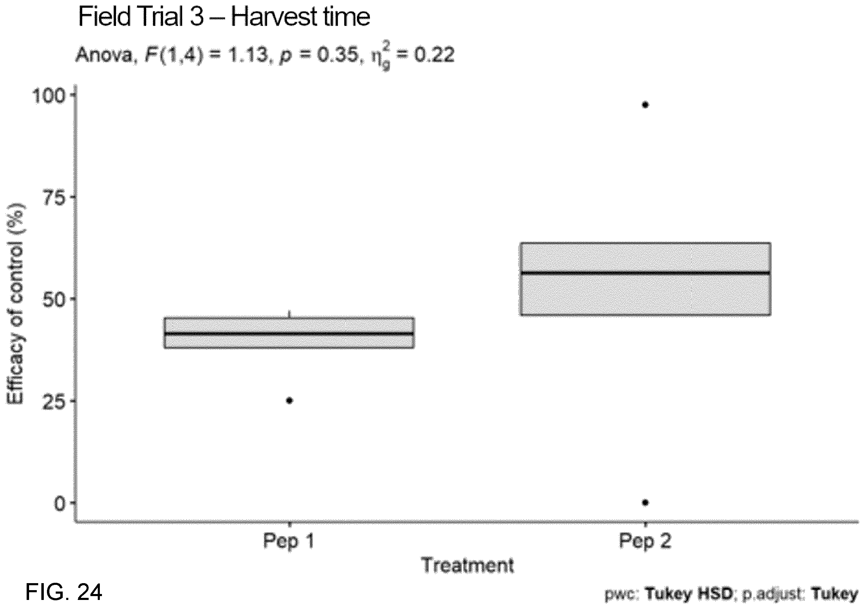

Figure 24 shows a graphical representation of the effect of the application of peptides GST-PpPep1 (Pep1) and GST-PpPep2 (Pep2) versus a No-Treatment control (NTC) on the efficacy of disease control corresponding to the field trial 3. Data was obtained at the end of the field trail and corresponded to the efficacy of disease control measured at the time of harvest. Box plots, variance analysis and mean comparison using the Tukey HSD test (P<0.05) are shown for each treatment.

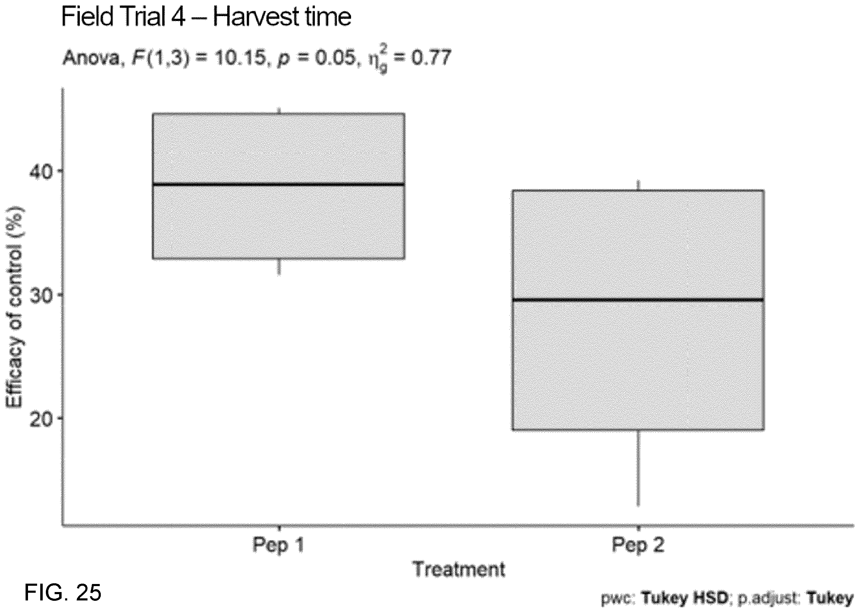

Figure 25 shows a graphical representation of the effect of the application of peptides GST-PpPep1 (Pep1) and GST-PpPep2 (Pep2) versus a No-Treatment control (NTC) on the efficacy of disease control corresponding to the field trial 4. Data was obtained at the end of the field trail and corresponded to the efficacy of disease control measured at the time of harvest. Box plots, variance analysis and mean comparison using the Tukey HSD test (P<0.05) are shown for each treatment.

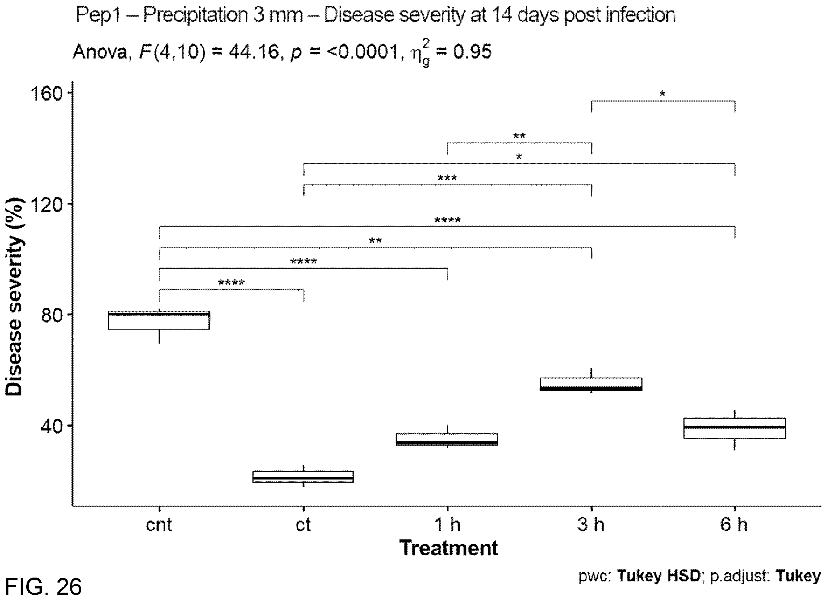

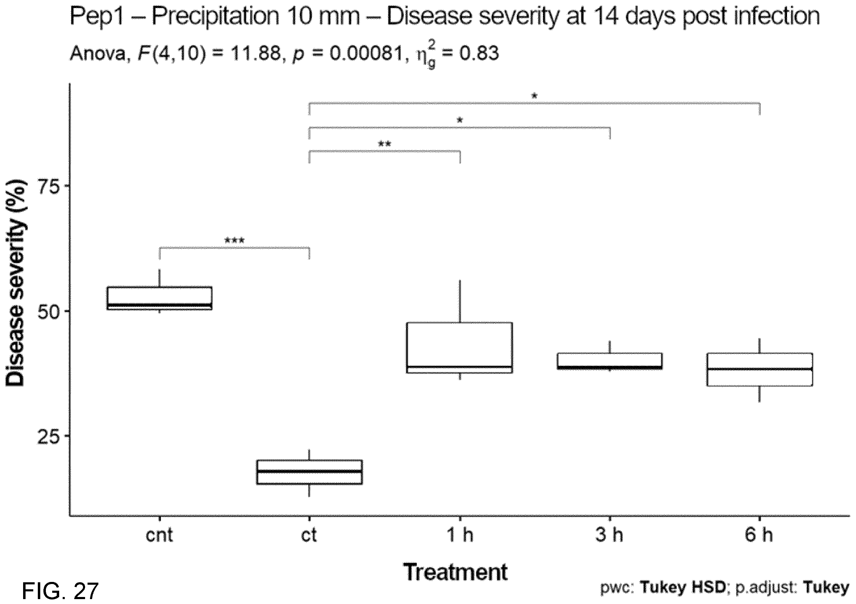

Figures 26 and 27 show a graphical representation of the effect of precipitation (3mm and 10 mm respectively) on the efficacy of disease control by the application of peptide GST-PpPep1 (Pep1) versus a No precipitation treated control (ct) and a No-Treatment control (cnt). Data was obtained at 14 days post infection. Box plots, variance analysis and mean comparison using the Tukey HSD test (P<0.05) are shown for each treatment.

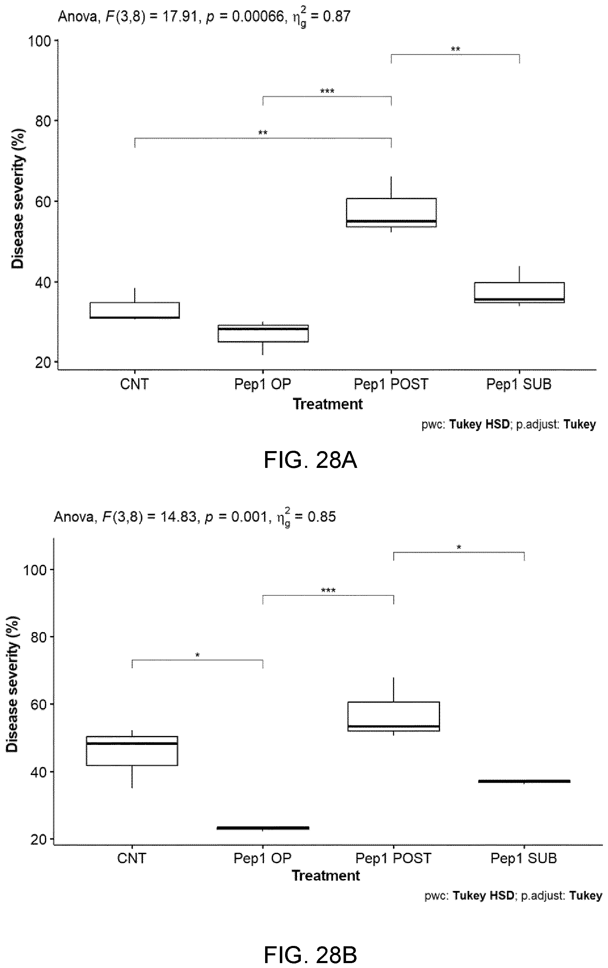

Figures 28A and 28B show a graphical representation of the effect of the application of peptide GST-PpPep1 (Pep1) versus a No-Treatment control (NTC) on the severity of the disease under optimal (OP), post infection (POST) and suboptimal (SUB) conditions in two moderate risk scenarios for infection. Data was obtained at 21 days post infection. Box plots, variance analysis and mean comparison using the Tukey HSD test (P<0.05) are shown for each treatment.

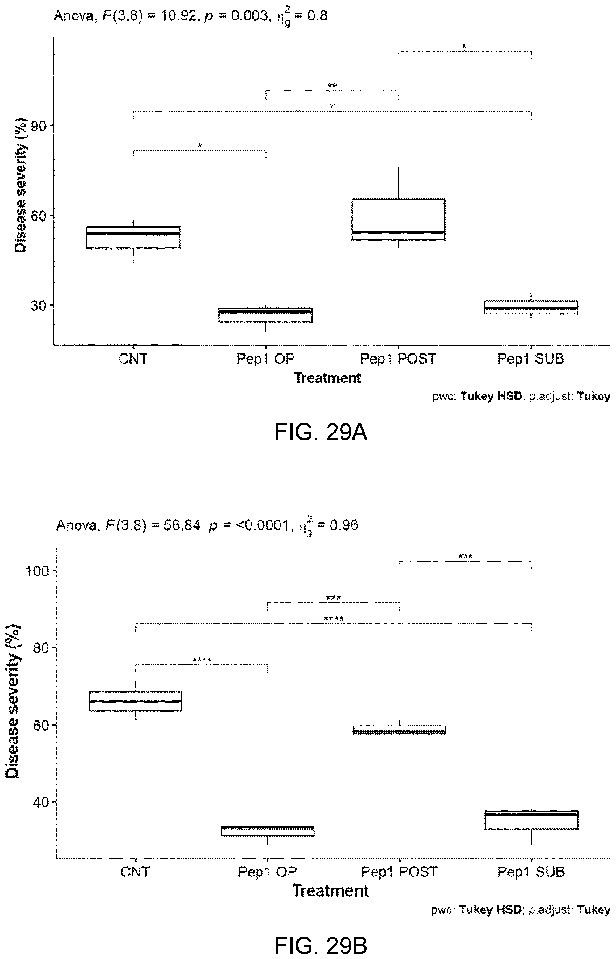

Figures 29A and 29B show a graphical representation of the effect of the application of peptide GST-PpPep1 (Pep1) versus a No-Treatment control (NTC) on the severity of the disease under optimal (OP), post infection (POST) and suboptimal (SUB) conditions in two high risk scenarios for infection. Data was obtained at 21 days post infection. Box plots, variance analysis and mean comparison using the Tukey HSD test (P<0.05) are shown for each treatment.

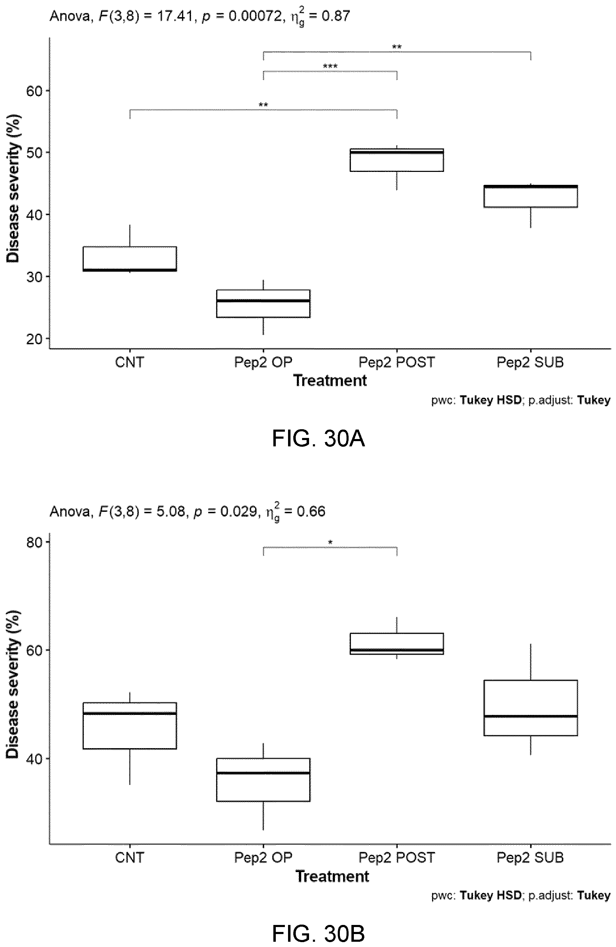

Figures 30A and 30B show a graphical representation of the effect of the application of peptide GST-PpPep1 (Pep1) versus a No-Treatment control (NTC) on the severity of the disease under optimal (OP), post infection (POST) and suboptimal (SUB) conditions in two moderate risk scenarios for infection. Data was obtained at 21 days post infection. Box plots, variance analysis and mean comparison using the Tukey HSD test (P<0.05) are shown for each treatment.

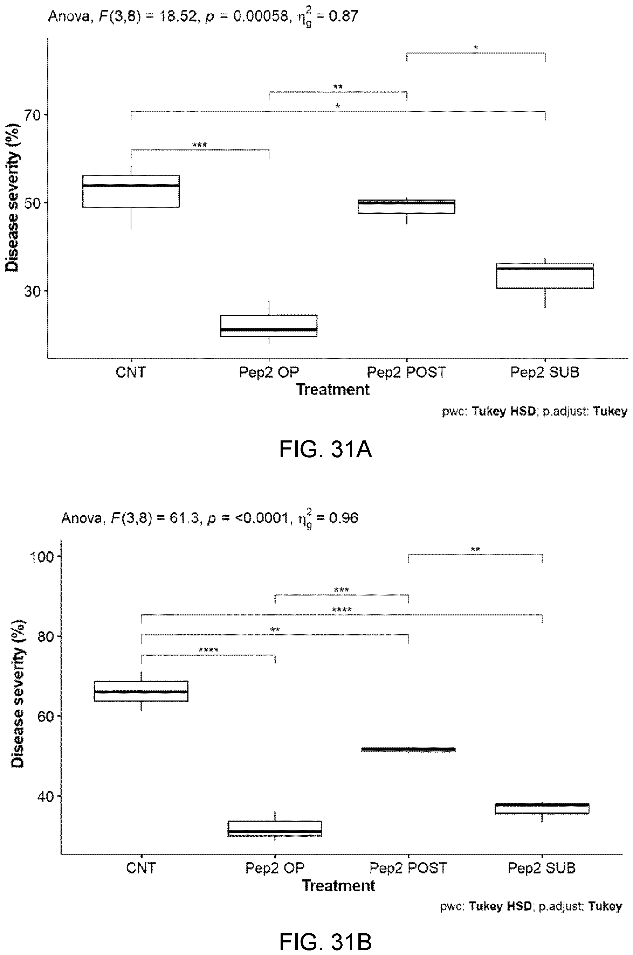

Figures 31A and 31B show a graphical representation of the effect of the application of peptide GST-PpPep2 (Pep2) versus a No-Treatment control (NTC) on the severity of the disease under optimal (OP), post infection (POST) and suboptimal (SUB) conditions in two high risk scenarios for infection. Data was obtained at 21 days post infection. Box plots, variance analysis and mean comparison using the Tukey HSD test (P<0.05) are shown for each treatment.

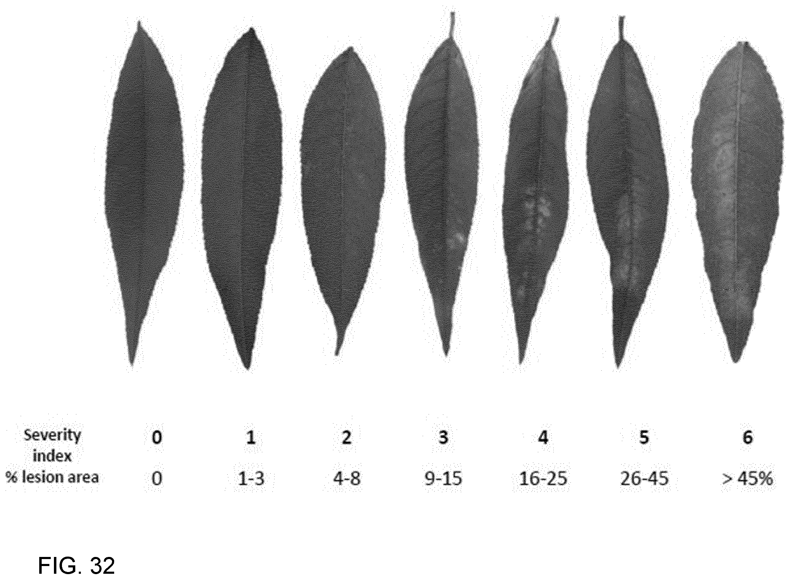

Figure 32 shows a representative examples of *Prunus persica* leaves infected with Xap and exhibiting bacterial spot disease severity indexes from 0 to 6 according to percent leaf area affected.

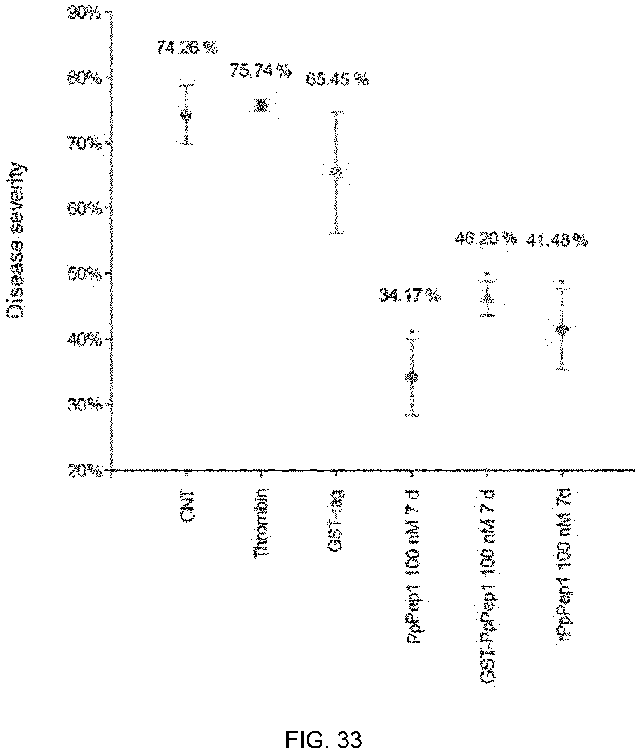

Figure 33 shows a graphical representation of the disease severity evaluated in P. *persica* × *P. dulcis* plants preventively treated with chemically synthesized PpPep1, recombinant P. *persica* peptide (rPpPep1) and GST-PpPep1. Treatments with water (CNT), thrombin and recombinant GST-tag were included as controls. 0.1 µM chemically synthesized or recombinant peptides was applied 7 days prior to infection with 10⁸ cfu/mL *Xap.* Data was taken 14 days post-infection. Mean values and error bars are shown. Asterisks indicate significant severity values in comparison to CNT (No Treatment Control) (Kruskal-Wallis post-hoc pairwise comparisons, p < 0.05). Sample size: three biological replicates of three plants, measurements were carried out on the tree leaves. The experiment was repeated three times with similar results.

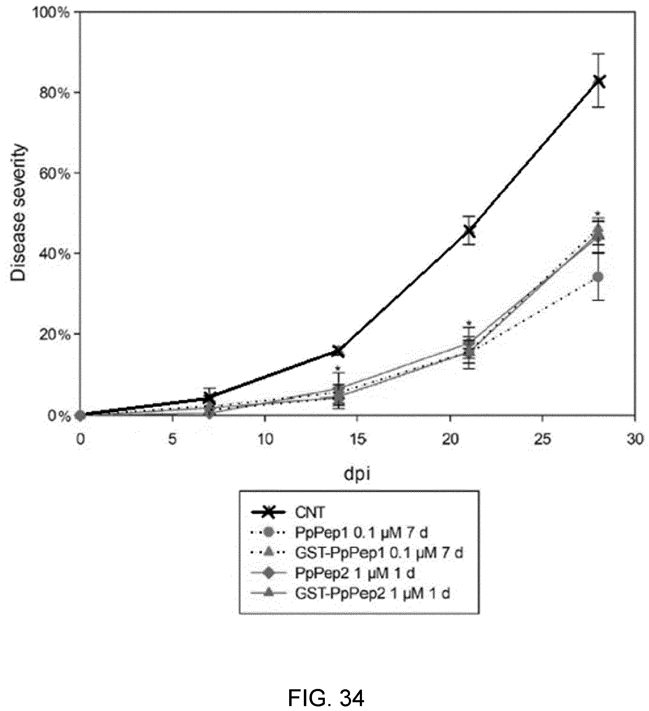

Figure 34 shows a graphical representation of the disease severity evaluated in P. *persica* × P. *dulcis* plants treated with chemically synthesized *P. persica* peptides PpPep1 and PpPep2, and recombinant GST-PpPep1 and GST-PpPep2. 0.1 µM GST-PpPep1 and PpPep1 was applied 7 days prior to infection with 10⁸ cfu/mL Xap; and 1 µM GST-PpPep2 and PpPep2 was applied 24 h prior to infection with the same pathogen and dose. Data was taken 7-, 14-, 21- and 28-days post-infection. Mean values and error bars are shown. Asterisks indicate that all severity values below are statistically different from negative control (CNT) (Kruskal-Wallis post-hoc pairwise comparisons, p < 0.05). Sample size: 3 biological replicates, each consisting of 3 trees. Disease severity measurements were carried out on the leaves. The experiment was repeated three times with similar results. GST-PpPep1, triangles and dotted line; GST-PpPep2, blue triangles and full line; PpPep1, circles and dotted line; PpPep2, circles and full line, and CNT "x" and back line.

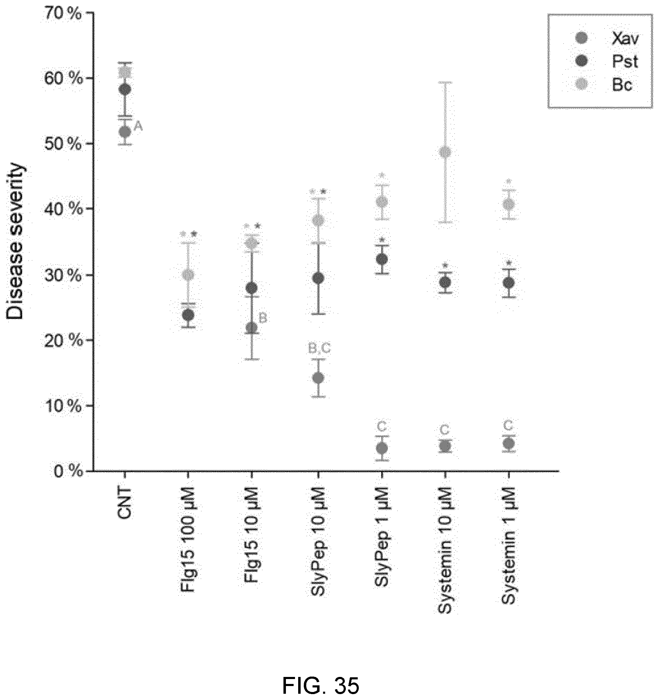

Figure 35 shows a graphical representation the severity of diseases evaluated in tomato plants preventively treated with different defence elicitor peptides and then challenged with 10⁸ cfu/mL *Pseudomonas syringae pv. tomato DC3000 (Pst),* 10⁸ cfu/mL *Xanthomonas axonopodis pv. vesicatoria* 2133-2 (*Xav*) and 2.5·10⁵ spores/mL *Botrytis cinerea* (*Bc*)*,* measured 13-, 18- and 24-days post-infection (dpi), respectively. All treatments were applied 24 h before pathogen infection. CNT= untreated control plants. Mean values and error bars are shown. Sample size: three biological replicates of three plants, disease measured in the leaves. Asterisks indicate significant differential severity values for *Pst* (black) and Bc (light gray) treatments; and letters A to C specify the post-hoc groups for *Xav* (gray) disease severity results (One-way ANOVA and Tukey's posttest, p < 0.05).

### Detailed description of embodiments of the invention

### Example 1

### Field trials

### Methodology

A preferred embodiment of the method according to the invention is described in detail below. This preferred embodiment was implemented for the control in the field of infection by *Xanthomonas arboricola pv. Pruni* (*Xap*) and for the control in the field of bacterial spot disease in plants of the genus Prunus. This preferred embodiment of the invention was implemented in 4 field trials:
Field trial 1 (Emilia-Romagna, Italy)
Field trial 2 (Emilia-Romagna, Italy)
Field trial 3 (Lleida, Spain)
Field trial 4 (Emilia-Romagna, Italy)

During the Field trial 3 in Lleida (Catalonia, Spain), meteorological data was obtained in the form of hourly predictions obtained from virtual meteorological stations geolocated in the fields and provided by Meteoblue AG comprising data predictions up to 7 days. Meteorological data predicted at 43h provided by AEMET (Spanish State Meteorology Agency) was also used (step [a]).

During field trials 1. 2 and 4 in Emilia-Romagna (Italy) predicted meteorological data was obtained from ARPAE (Agencia Prevenzione Ambiente Energia Emilia-Romargna) (step [a]).

In each case, the data obtained was interpolated to obtain the following infection risk parameters (IR): a daily predicted infection risk parameter (S_{P}) and a 3-day accumulated predicted infection risk parameter (CS_{P}), a daily real infection risk parameter (S_{R}) and a 3-day accumulated real infection risk parameter (CS_{R}). The predicted infection risks parameters were obtained using predicted data and the real infection risk parameters were obtained using measured data. For example, models allowing to obtain said infection risk parameter can be constructed based on:
Morales *et al.* 2017 (https://doi.org/10.1371/journal.pone.0177583),
Morales *et al.* 2018a (https://doi.org/10.1371/journal.pone.0193813), and
Morales *et al.* 2018b (https://doi.org/10.1007/s10658-018-1507-7).

Models were adjusted to the inoculum concentrations expected in the regions where the field trails were done.

In all field trials (Field Trial 1 to Field Trial 4), two plant defence response eliciting agents were simultaneously evaluated: a fusion peptide comprising the elicitor peptide PpPep1 and a GST affinity tag (GST-PpPep1 - SEQ ID N° 3) and the fusion peptide comprising elicitor peptide PpPep2 and a GST affinity tag (GST-PpPep2 - SEQ ID N° 4). For convenience, in the figures corresponding to this Example 1, the annotations Pep1 and Pep2 correspond to the respective fusion peptide GST-PpPep1 and GST-PpPep2. However, it is understood that the corresponding elicitor peptides without an affinity tag could also have been used, and similar results would have been obtained.

A statistical design with randomized blocks was used comprising 3 treatments: GST-PpPep1, GST-PpPep2 and No-Treatment control (NTC) and 4 or 5 blocks depending on the trial. For each block, one tree per treatment was used, in which 4 buds/branches were marked. Periodically, the disease progression was evaluated by determining its incidence and severity in 20 leaves per bud/branch.

Incidence was defined as the percentage of leaves with at least one lesion and the severity was defined as an index depending on the number of lesions and the affected leave area (%). In the field trial in Lleida (Field trial 3), 7 evaluations were done. In each of the 3 field trials in Emilia-Romagna (Field trials 1, 2, and 4), 3 evaluations were done.

During the field trial in Lleida (Field trial 3) a total of 5 treatments with GST-PpPep 1 and PpPep 2 were scheduled and applied by using the method according to the invention. with a determined E parameter of 48 hours (or 2 days). That is the GST-PpPep 1 and GST-PpPep2 treatments respectively were scheduled and applied 48 hours before each predicted *Xap* infection (Figure 8).

During each of the 3 field trials in Emilia-Romagna (Field trial 1, Field trial 2, and Field trial 4) a total of 4, 4 and 3 treatments with GST-PpPep 1 and GST-PpPep 2 were scheduled and applied respectively. For the first two trials, an E parameter of between 5 and 7 days was determined for GST-PpPep1 and an E parameter of between 24 and 48 hours was determined for GST-PpPep2. That is, the GST-PpPep 1 treatments were scheduled and applied between 5 and 7 days before each predicted *Xap* infection, and the GST-PpPep2 treatments were scheduled and applied between 24 and 48 hours before each predicted *Xap* infection. During the third trial the 3 treatments with GST-PpPep1 and GST-PpPep2 respectively were all scheduled and applied with a determined E parameter of 48 hours, that is 48 hours before the predicted *Xap* infections (Figure 6, 7, and 9).

### Results

In the 3 field trials performed in Emilia-Romagna (Field trial 1, Field trial 2, and Field trial 4) the progression of the disease, determined in this example by the incidence of the disease in the leaves, was higher in the non-treated control NTC than in plants treated with GST-PpPep 1 and GST-PpPep 2, as shown in Figures 10A, 11A, and 13A.

In the field trial performed in Lleida (Field trial 3) the progression of the disease, determined in this example by the incidence of the disease in the leaves, was higher at the end of the trial in the non-treated control NTC than in plants treated with GST-PpPep 1 and GST-PpPep 2 as shown in Figure 12A. The delayed effect of the treatment during the trials in Lleida, when compared to the field trials in Emilia-Romagna can be explained by higher disease levels present in the Lleida fields. These trials together show that an E parameter of between 5 and 7 days for GST-PpPep1 and an E parameter of between 24 and 48 hours for GST-PpPep2 lead to improved disease control.

During these trials, the disease severity quantifying the number of lesions and the affected tissue was also determined. In all the trials a decreased disease severity over time was observed for the treated plants, both with GST-PpPep1 and GST-PpPep2, when compared with the non-treated controls NTC (Figures 10B, 11B, 12B, and 13B).

Both, the data obtained on disease incidence and on disease severity at the end of each trial confirmed that the treatment with GST-PpPep1, and the treatment with GST-PpPep2, respectively, following the application schedule determined by the method according to the invention, reduced both indicators significantly when compared with non the non-treated controls (Figures 14 a 17, and Figures 18 to 21).

When looking at the efficacy measure of the control of the disease incidence in leaves compared to non-treated controls at the end of each trial, a reduction of the disease incidence between 38.6% and 60.4% on average was observed for the treatment with GST-PpPep1 and a reduction of the disease incidence between 27.8% and 52.6% on average was observed for the treatment with GST-PpPep2 across the 4 trials performed. No significant differences were observed in the control efficacies between the two treatments (Figures 22 to 25).

Overall, the results shown above demonstrate that in-field treatments with GST-PpPep1 or GST-PpPep2 by the method according to the invention leads to an effective control of the infection by *Xanthomonas arboricola pv. Pruni* (*Xap*) and the progression of bacterial spot disease in plants of the genus Prunus in the field, that is under real and variable meteorological conditions across different locations.

### Example 2

### Determination of a plant defence response eliciting agent-related meteorology-dependent parameter C_{EA,M}: precipitation

### Methodology

The effect of precipitation in the persistency and disease control efficacy was determined in a model system involving plants of the Genus Prunus GF677 pretreated with GST-PpPep 1 and GST-PpPep2, which were subjected to rain episodes of varying amounts (1, 3 and 10 mm) in a computer-controlled rain simulator located in a greenhouse. The effect of the amount of precipitation was evaluated at 1-, 6-, and 24-hours post-application of the respective Pep. Plants were subsequently inoculated with *Xap* at the corresponding optimal time interval corresponding to the onset of action determined for each peptide in Example 1. Plants were incubated in the greenhouse under optimal conditions for the development of the disease (bacterial spot). Disease progression was evaluated during 21 days in a randomized statistical design with 3 replicates of 3 plants per replicate. The disease control efficacy of the treatments was analysed and compared with the disease control efficacy of treatments with GST-Peps without rain and non-treated controls. For convenience, in the figures corresponding to this Example 1, the annotations Pep1 correspond to the respective fusion peptide GST-PpPep1. However, it is understood that the corresponding elicitor peptide without an affinity tag could also have been used, and similar results would have been obtained.

### Results

For GST-PpPep1 (Pep1) it was determined that precipitation of 1 mm post application did not reduce the disease control efficacy, independently of the timing of the rain episode (1, 6, or 24 hours post application). Rain episodes of 3 mm partially reduced the disease control efficacy, independently of the timing of the rain episode (1, 6, or 24 hours post application). Precipitation of 10 mm negatively affected the activity of GST-PpPep1 for the protection of Prunus in front of *Xap* as no significative reduction of the disease severity was observed (Figures 26 and 27).

### Example 3

### Validation in a simulated environment of the treatment with GST-PpPep1 and GST-PpPep2 using an application schedule determined by the method according to the invention.

### Methodology

A prototype was developed comprising a support decision system (SSD) based on the method according to the invention. This prototype was validated in a controlled environment simulating filed conditions. Different weather scenarios of infection risk (based on historical field data and infection risk predictions based on the XapCAST model) were developed, including situations of low, moderate, and high risk of infection by *Xap.* These scenarios were simulated under controlled conditions in a weather simulation chamber and under a monitored hood in the greenhouse.

Batches of Prunus GF677 plants were treated according to three treatment regimens: optimal (1 or 7 days before infection by *Xap* for Pep 2 and Pep1 respectively); suboptimal (2 days before infection by *Xap*) and post-infection (24h hours after infection by *Xap).* Treated plants were kept in the greenhouse up to the inoculation with Xap to initiate the infections and were incubated for 24 hours under the conditions corresponding to the respective scenario to be evaluated (moderated risk, low, and high). After this period all plants were incubated under optimal condition for the disease to develop. Disease progression was evaluated for 21 days. The prototype was validated in 5 risk scenarios according to the infection risk model [low (1), moderate (2), and high (3)]. Three batches (replicates) of 3 plants each were used per each combination of treatment/scenario, with a randomized statistical design. For convenience, in the figures corresponding to this Example 1, the annotations Pep1 and Pep2 correspond to the respective fusion peptide GST-PpPep1 and GST-PpPep2. However, it is understood that the corresponding elicitor peptides without an affinity tag could also have been used, and similar results would have been obtained.

### Results

An increase in disease severity was observed (between 24% and 66%) in plants inoculated with Xap and not treated with Peps (non-treated control) according to the predicted scenario. The efficacy of the GST-Peps was related to the application schedule (optimal, suboptimal or postinfection) in each disease risk scenario. The application of Peps post infection did not show any effect in reducing the disease severity.

The application of GST-PpPep1 under optimal and suboptimal conditions (48 hours and 24 hours before the infection respectively) significantly reduced the progression of the disease under the scenarios of moderate and high risk and to a similar extent (control efficacy of 44% and 51% respectively) (Figures 28A, 28B, 29A, and 29B)

The application of GST-PpPep2 under optimal and suboptimal conditions significantly reduced the progression of the disease under the scenario of high risk and to a similar extent (control efficacy of 37% and 55% respectively). For the moderate risk scenario, treatment with Pep 2 under suboptimal conditions showed a lower control efficacy (Figures 30A, 30B, 31A, and 31B).

Overall, these results confirm the efficacy of GST-PpPep1 and GST-PpPep2 for the control in the field of spot disease in stone fruit trees when applied under pre-infection conditions in different risk scenarios. These results validate the results obtained in field an confirm a preferred E parameter for GST-PpPep1 and GST-Pp Pep2 of 7 days and 24 hours respectively, which allowed an effective control the disease under real weather conditions. These results also validate a preferred E parameter for both GST-PpPep1 and GST-PpPep2 of 48 hours, which also allowed an effective control the disease under real weather conditions.

### Example 4

### Fusion peptides comprising a plant elicitor peptide and an affinity tag as plant defence eliciting agents for the control in the field of plant diseases.

### Methodology

The following methods are provided by way of examples of methods available to the skilled person in the art to obtain plant elicitor peptides (Peps) and fusion peptides comprising a N-terminal affinity tag and a C-terminal plant elicitor peptide. The methods below allowed to obtain the peptides PpPep1 (SEQ ID N° 1) and PpPep2 (SEQ ID N° 2) and the fusion peptides GST-PpPep1 (SEQ ID N° 3) and GST-PpPep2 (SEQ ID N° 4).

### Production of recombinant PpPep1 and PpPep2 in E. coli

pUC based vectors containing each synthetic sequence were produced by Integrated DNA Technologies (Leuven, Belgium). They were transformed into *E. coli* DH5α competent cells and used to purify larger amounts of plasmid DNA (see sections 4.2.7 and 4.2.8). The PpPep1 and PpPep2 sequences were extracted from pUC-EcPpPep1 and pUC-EcPpPep2 and subcloned in pGEX-4T-2 (GE Healthcare Bio-Sciences AB, Uppsala, Sweden) previously amplified in DH5α using the same procedure.

### Restriction enzyme digestion

Sequential digestions were performed to 4 µg pGEX-4T-2 and vectors containing EcPpPep1 and EcPpPep2. Not I and BamH I endonucleases (Roche Applied Science) digestion were performed separately according to each manufacturer's protocol (Table 14), using the appropriate buffer and incubating 3 h at 37 °C. DNA fragments were purified using the QIAquick Nucleotide Removal Kit (QIAGEN) after the first reaction, according to the manufacturer's manual. After the second restriction reaction, DNA purification was performed with QIAquick Gel Extraction Kit (QIAGEN) to target the process and obtain only the desired DNA fragments. Restriction efficiency was always tested by agarose gel electrophoresis. All products from enzyme digestion were loaded onto agarose gel 1% and after gel running and staining (see section 4.2.3), the bands of product of interest were cut using a sharp scalpel (Figure 24) and processed following manufacturer's protocol. The eluted DNA was stored at -20 °C until use.

### DNA dephosphorylation

A dephosphorylation step ensures removal of the 5' phosphate groups, thus reducing the occurrence of vector re-closure by intramolecular ligation. Dephosphorylation of the linearized pGEX-4T-2 vector was carried out using the enzyme alkaline phosphatase (Rapid DNA Dephos & Ligation Kit, Roche Diagnostics Gmbh) according to manufacturer's manual and considering sticky 5' overhang ends generated by Not I and BamH I. The amount of alkaline phosphatase needed for the reaction was calculated considering the molarity of ends of the digested vector (https://www.promega.es/resources/tools/biomath/). An amount of 0.05 U/pmol ends of alkaline phosphatase was used, which was diluted in 50 mM Tris-HCl, pH 9.0 just before use. All needed reactants were added to the total purified vector volume (26.5 µL) (Table 15). The reaction was completed after 10 min at 37 °C.

### Ligation of DNA inserts to vectors

Digested EcPpPep1 and EcPpPep2 DNA fragments were purified from 1.5% agarose gel following QIAquick Gel Extraction Kit (QIAGEN) recommendations and then ligated to linearized and dephosphorylated pGEX-4T-2 using T4 DNA Ligase from Rapid DNA Dephos & Ligation Kit (Roche Diagnostics Gmbh). Two different vectors to insert molar ratios were considered to ensure effective ligation (1:10 and 1:18). The ligations were carried out according to manufacturer's instructions and incubated O/N at 18 °C. Construct transformations into E. coli were at first performed in DH5α to assure maintenance and propagation of the plasmid. DH5α competent cells were transformed following section 4.2.7 steps and spread onto LB+Amp plates containing the selected antibiotic. All plates were incubated O/N at 37 °C.

### Screening of transformed colonies

Successfully transformed DH5α cells were selected by a screening step. Between 10 and 20 colonies were picked up using sterile tips and these were mixed on 20 µL of sterile water for 1-2 hours, taking 1 µL as template for each screening PCR reaction (Table 6). Primers used were EcPpPep1/2-for and -rev from section 3.5, and PCR conditions are detailed in Table 8.

### Recombinant pGEX transformation to BL21 (DE3) strain

Once it was established that the insert was in the proper orientation and the correct junctions were present, optimization expression of tagged proteins was performed. The *E. coli* strain chosen for protein expression was BL21(DE3) due to its protease-minus nature and transformation of fresh-made BL21 (DE3) competent cells was completed as described in section 4.2.7. Screening of colonies carrying recombinant pGEX vectors was performed (see section 4.2.2). PCR reagents and conditions for colony screening are detailed in Tables 6 and 7. Selected colonies were propagated by 5 mL LB+Amp inoculation and O/N incubation at 37 °C with a constant shaking of 250 rpm. Afterwards, cultures were mixed with 1 volume of 40% glycerol and stored at -80 °C until required.

### Small-scale GST-Pep expression

We established an initial procedure to prepare crude lysates for initial GST-tagged protein expression screening based on Evans (1990). Selected BL21(DE3) carrying recombined pGEX vector glycerol stock was inoculated into 5 mL of LB+Amp and incubated O/N at 37 °C with a constant shaking of 250 rpm. Subsequently, 24 mL of LB+Amp were inoculated with 1 mL of the O/N culture and incubated at 37 °C with 250 rpm shaking until the culture reached an OD600 of 0.7-0.8. Afterwards, GST-Pep expression was induced by adding IPTG to a final concentration of 1 mM. The culture was incubated for 3 additional hours at the same conditions. 100 µL samples of the culture were taken before and after protein expression for subsequent SDS-PAGE analysis. The culture was transferred into a prechilled centrifuge flask and centrifuged at 1,500 × g at 4 °C during 7 min (Centrifuge 5810R, Eppendorf). Then, the pellet was suspended in 0.2 volumes of prechilled 1× PBS avoiding foaming. A second sedimentation step was performed, and the pellet was suspended in 10 mL 1× PBS and the protease inhibitor PMSF was immediately added to a final concentration of 1 mM. The ice-cold culture was lysed by submitting it to 1,000 psi on a SLM Aminco FA-078 French Pressure Cell Press. The cell disrupted culture was centrifuged at 13,000 × g at 4 °C during 30 min (Centrifuge 5810R, Eppendorf). Samples of both pellet and supernatant were analysed by SDS-PAGE.

### E. coli GST-Peps expression analysis on SDS-PAGE electrophoresis

SDS-PAGE was used for the detection of E. coli-expressed GST-Peps. Mini-Protean^{®} Tetra Cell system (Bio-Rad) was used following the manufacturer's instructions with some modifications. Separation and stacking gels were arranged as described in Table 16 and placed into the gel rid. 1× SDS-PAGE running buffer was added to upper and lower chambers. Protein samples were diluted 1:2 in 2× sample buffer (section 3.4) and boiled for 5 min at 95 °C prior to loading. Molecular weight marker (PageRulerTM Low Range Protein Ladder, Thermo Scientific) and samples were loaded onto the corresponding wells. The gel was run at constant voltage of 70 V for 30 min, and subsequently at 120 V for 60 min. Immediately, the gel was covered serially with fixing, staining, destaining and storing solution (see section 3.4, SDS-PAGE buffers) for 10 min, 15 min, 14 h and 5 min, respectively, in constant soft shaking. Finally, it was scanned with Epson Perfection V750 PRO and stored at 4 °C for several weeks.

### Mid-scale GST-Peps expression.

After selecting those BL21(DE3) colonies with highest GST-Peps expression yields, a mid-scale protein expression procedure was optimized. It was based on the previously described small-scale process, with some variations. For every selected colony, a glycerol stock was inoculated into 8-100 mL of LB+Amp and incubated O/N at 37 °C with constant shaking (250 rpm). Subsequently, 200 mL-4 L of LB+Amp were inoculated with 0.04 volumes of O/N culture and incubated at 37 °C with 250 rpm shaking until the culture reached an OD600 of 0.8. For 150-1,000 mL cultures, baffled Erlenmeyer flasks were used, which were incubated at 80 rpm. For larger volumes, a batch system was used (see section 4.3.10). Afterwards, GST-Pep expression was induced by adding IPTG to a final concentration of 1 mM. The culture was incubated for 3 more hours at the same conditions, transferred into a prechilled centrifuge flask and sedimented at 1,500 × g at 4 °C during 7 min (Centrifuge 5810R, Eppendorf). Then, the pellet was suspended in 0.2 volumes of prechilled 1× PBS, avoiding foaming. Another sedimentation step was performed, and the pellet was suspended in 0.05 volumes of 1× PBS with PSMF (1 mM final concentration). The ice-cold culture was lysed by sonication or high pressures. The latter consisted of submitting the sample to 1,000 psi on SLM Aminco FA-078 French Pressure Cell Press. The cell disrupted culture was centrifuged at 13,000 × g at 4 °C during 30 min (Centrifuge 5810R, Eppendorf). Cell lysis by sonication was performed using the sonicator Branson 450 (Branson Ultrasonics, Conncecticut, USA) applying power at 30% to the culture for 5 seconds, repeated 15 times, with 30 seconds intervals. This procedure was carried out on ice to avoid protein denaturalization. Samples were stored on ice until the purification step.

### Mid-scale GST-Peps expression in a batch system

Large cultures (1-4 L) were batch-operated in a Biostat B 5-Liter Fermentor (B Braun Biotech International GmbH, Melsungen, Germany) (Figure 25) following the procedures described above with some adaptations. The system was previously autoclaved, and the media, culture and reagents were poured using a peristaltic pump (Watson Marlow 313S, Watson-Marlow Fluid Technology Group, UK) under sterile conditions. A constant aeration of 2.5 L per minute of air and agitation of 150 rpm were set. Undiluted Mazu DF 204 (BASF, Florham Park, NJ) antifoam was injected manually when excess foaming occurred. Cell sedimentation stages were operated in a large-capacity centrifuge (Sorvall RC5C Plus, Marshall Scientific, New Hampshire).

### Recombinant GST-Peps purification and quantification

GSTrap^{™} 4B 1 mL and 5 mL affinity columns (Cytiva) were used for recombinant GST-Peps purification, depending on the operating volume. The protocol was settled according to the instructions of the manufacturer. The lysed culture and buffers were filtered through a 0.45 µm filter before use. Binding and elution buffers are described above (Recombinant GST-Pep production in E. coli and purification buffers). GSTrapTM 4B 1 mL when purifying a sample volume up to 10 mL, introducing buffers through a sterile syringe and a Luer connector avoiding air introduction into the column. When larger volumes needed to be purified, GSTrapTM 4B 5 mL and a peristaltic pump (Minipulse 3, Gilson Scientific) were used (Figure 26). Prior to sample purification, columns needed to be equilibrated with a binding buffer and followed by a washing step also with binding buffer. Volumes and flow rate of these proceedings are detailed in Table 17. Elution of GST-Peps was run with an elution buffer and the eluate was collected in separate tubes (1 mL/tube) on ice. Aliquots of 15 µL of all samples were analyzed on SDS-PAGE thereafter. The concentration of GST-tagged Pep was determined by measuring the absorbance at 280 nm (Nanodrop Technologies, Wilmington, DE, USA). According to the manufacturer, Abs280 = 1 corresponds to 0.5 mg/mL GST protein, and the concentration of Peps was calculated considering the molecular weight of GST (25,700.85 g/mol), Pep1 (2,340.58 g/mol) and Pep2 (2,633.90 g/mol) (https://web.expasy.org/compute_pi/). Thus, Abs280 = 1 corresponds to 44.47 µg/mL of Pep1 and 50.05 µg/mL.

### GST-tag cleavage

Recombinant GST-Peps sequence was designed specifically to allow cleavage of GST from the Pep sequence when necessary. Therefore, a thrombin (protease) recognition site was placed between GST and the Pep sequence (see section 5.5.2). The procedure consisted on a mid-scale GST-Pep expression as detailed above and modified GST-Pep purification using GSTrapTM 4B 1 mL affinity columns (Cytiva). As indicated in the manufacturer's instructions, thrombin cleavage was performed by loading 1 mL of premixed 80 µL thrombin solution (1 U/µL) with 920 µL 1× PBS and incubating for 12-16 h at room temperature. The recombinant Pep and thrombin were eluted with 3 mL of 1× PBS while the cleaved GST was subsequently obtained using an elution buffer. Both types of samples were collected and analysed by SDS-PAGE thereafter.

### Recombinant Peps quantification by HPLC

After GST-tag cleavage with thrombin, recombinant PpPep1 was quantified by high performance liquid chromatography (HPLC). The conditions were standard HPLC analytical settings with a 1260 Infinity II liquid chromatography instrument (Agilent Technologies) composed of a Diode Array Detector HS, a Quaternary Pump VL, a 1260 Vial sampler and OpenLab CDS ChemStation software. Analyses were carried out with a Kinetex 5 µm XB-C18 100 A, 100x4.6 mm column with a linear gradient of 2-100% B over 12 min at a flow rate of 1 mL/min. Initially, a calibration curve was constructed with synthetic PpPep1 (Caslo ApS, Lyngby, Denmark).

### Recombinant Peps identification by ESI-MS

Identity of PpPep1 was confirmed thereafter by electrospray ionization - mass spectrometry (ESI-MS) with an Esquire 6000 ESI ion Trap LC/MS (Bruker Daltonics) instrument equipped with an electrospray ion source, from Technical Service Unit of the University of Girona. The instrument was operated in the positive ESI(+) ion mode, at 500-2,800 mass-to-charge ratio (m/z). Samples (10 µL) were introduced into the mass spectrometer ion source directly through an HPLC autosampler (1200 Series Agilent Technologies) with a mobile phase (80:20 CH3CN/H2O) at a flow rate of 100 µL/min. Nitrogen was employed as both the drying and nebulising gas.

### Infection with pathogens and disease evaluation.

### Prunus infection with pathogens and disease evaluation.

For Xap infection into Prunus, 650 µL of a freshly prepared 10⁸ cfu/mL Xap suspension was sprayed onto five adult leaves of each plant 24 h, 4 d or 7 d after treatment, with either PpPep1 or PpPep2 (or derivatives). The following 48 h after *Xap* infection, plants were incubated under 100% humidity conditions. Afterwards, conditions were set at about 60% relative humidity, 25 °C/19 °C (day/night) under natural light (standard conditions in the glasshouse).

The progress of bacterial spot infection was monitored weekly for three to four weeks. For the disease severity index, a 0-to-6 interval scale was used, corresponding to the level of leaf area affected: 0, 1-3, 4-8, 9-15, 16-25, 26-45 and > 45% (leaf abscission), respectively (Figure 32), Bardsley and Ngugi, 2013). Disease severity (S) was calculated for each plant according to the equation: S = [(Σ_{*n*=1*N*}/*n*)/N×6] ×100, where *In* is the severity index for each leaf, N is the number of leaves per plant, and 6 is the maximum severity index value in the scale. Kruskal-Wallis post-hoc pairwise comparisons (IMB SPSS Statistics 25, p < 0.05) were used to analyse the severity. The assays were repeated twice with different batches of plants.

### Tomato infection with pathogens and disease evaluation.

Freshly prepared 10⁸ cfu/mL *Xav* or *Pst,* or 2.5 105 spores/mL Botrytis suspension was sprayed until cover the full surface of all adult leaves of each plant (5-7 leaves) 24 h after peptides treatment. Plants were incubated under standard conditions in the glasshouse. The severity of *Xanthomonas axonopodis pv. vesicatoria* 2133-2 (*Xav*) infection on tomato leaves was determined for each leaf according to a scale from 0 to 4 according to the symptoms observed: 0, no symptoms; 1, yellow isolated spots < 2 mm; 2, yellow isolated spots with a < 1 mm necrotic centre; 3, chlorosis areas with a < 3 mm necrotic center; 4, severe necrotic lesions spread through the leaf. *For Pseudomonas syringae* pv. tomato DC3000 (*Pst*), the severity was measured on an arbitrary scale from 0 to 4 according to the symptoms developed: 0, no symptoms; 1, isolated and irregular dark spots; 2, leaf margins also develop necrotic areas; 3, larger necrotic margins and yellow halo around spots; 4, severely affected leaves, non-necrotic areas turned yellow. For both pathologies, the mean severity was calculated for each replicate following the equation: S = [(Σ*n*=1*N*/n)/N×4] ×100, where *In* is the severity index for each leaf, N is the number of leaves per plant, and 4 is the maximum severity index value in the scale. The effect of peptides on leaves infection was determined using analysis of variance (ANOVA, IMB SPSS Statistics 25). Means were separated using the Tukey's test (p < 0.05).

### Activity of recombinant PpPeps to protect peach plants (Prunus sp.) against Xap

The activity of rPpPep1 was tested through an in vivo approach with *P. persica* × *P. dulcis* and the bacterial phytopathogen *Xap*. Chemically synthesized PpPep1 and GST-tag-excised-Pep1 (rPpPep1) were topically applied onto peach leaves in optimal PpPep1 conditions i.e., 1 µM doses applied 7 days prior to challenge with 108 ufc/mL Xap. The free recombinant peptide was applied without any further purification from thrombin remains from the column elution step. We thus included treatment with thrombin as a control. Additional controls were GST-tag produced in *E. coli* harbouring the original pGEX-4T-2 plasmid and following the same approach as for GST-tagged PpPeps; and GST-tagged recombinant PpPep1 (GST-PpPep1). They were all applied in the same conditions. The experiment was repeated three times with similar results; an example is shown in Figure 33.

rPpPep1 was as effective as chemically synthesized PpPep1 in enhancing resistance of peach plants to *Xap.* Fourteen days after infection both rPpPep1 and the chemically synthesized peptide caused reduction of around 40% *Xap* symptoms, in comparison to untreated control plants. Thrombin alone did not show any effect when it was sprayed onto leaves (ANOVA and Tukey's posttest, p > 0.05), which confirmed that the free recombinant peptide had the expected functionality.

Further analysis of all treatments using One-way ANOVA and Tukey's HSD post-hoc test separately grouped peptide treatments with chemically synthesized PpPep1, rPpPep1 and, surprisingly, also GST-PpPep1, from the rest of control treatments i.e., water, thrombin, and GST-tag (p < 0.05). Figure 33 shows the disease severity recorded 14 days post infection (dpi) in plants subjected to the different treatments and challenged with *Xap.* GST-PpPep1 protected *Prunus* from *Xap* infection with similar values of disease severity reduction as rPpPep1 and chemically synthesized PpPep1 (i.e., nearly 40 %). Plants treated with recombinant GST were similarly affected by *Xap* as those receiving no specific treatment (p > 0.05), thus confirming the lack of protective activity of the GST-tag and residues corresponding to the thrombin cleavage site. In Arabidopsis, the capacity of GST-tagged AtPeps to bind the corresponding AtPEPR has been proved in vitro (Tang et al., 2015). On top of that, our results establish the activity of GST-PpPeps in enhancing the resistance to the bacterial pathogen *Xap* in plants with the same efficacy as synthetically obtained peptides.

The activity of GST-PpPep2 was then evaluated by following the same procedure, and GST-PpPep1 was included in the assay. Each recombinant peptide was topically applied to peach plants in the optimal conditions (concentration and timing) established for the corresponding chemically synthesized peptide. Chemically synthesized PpPep1 and PpPep2, and water, were applied as well as control. All plants were then challenged with 108 cfu/mL Xap 7 and 1 days after PpPep1 and PpPep2 treatments, respectively, and disease symptoms were weekly monitored (Figure 34). From the first observation (7 days post infection) up to leaf abscission of mock plants (3 weeks post infection) GST-PpPep2, as well as GST-PpPep1, significantly reduced *Xap* symptoms up to the same levels as the corresponding chemically synthesized peptides (Kruskal-Wallis post-hoc pairwise comparisons, p < 0.05). Reduction of disease symptoms ranged from around 60% at 14- and 21-days post infection (dpi) to 45% at 28 days post infection (dpi). Thus, recombinant GST-PpPeps efficiently protect peach from a *Xap* massive infection despite the GST-tag and thrombin site placed in the amino terminal end of each peptide.

### Example 5

### SIPep6 protects tomato from Xanthomonas axonopodis pv. vesicatoria, Pseudomonas syringae pv. tomato and Botrytis cinerea

The activity of peptide SIPep6 (SEQ ID N° 7 - ATDRRGRPPSRPKVGSGPPPQNN), was compared to two known tomato defence elicitors: Sys and the flagellin epitope flg15. Exogenous supply of nanomolar doses of Sys (AVQSKPPSKRDPPKMQTD) results in induction of various defence responses in S. *lycopersicum* (Corrado et al., 2016; Felix and Boller, 1995). Flg15 (RINSAKDDAAGLQIA-OH) is a shorter version of the well-characterized flg22. Although the N-terminal part of flg22 (RLSTGS) has been described to be important for the interaction with its receptor FLS2 in *A. thaliana* and tobacco, this structure does not seem to be essential in tomato (Badosa et al., 2017; Miyata et al., 2006). In tomato, the flg15 peptide sequence is structurally sufficient to trigger the characteristic PTI-like response to flagellin.

In a similar experimental design as carried out with peach Peps, we used *Solanum lycopersicum* plants grown in the greenhouse under standard conditions up to the vegetative stage. They were preventively sprayed with water or chemically synthesized SIPep6, Sys and flg15, and different sets of plants were then (after 24 h) challenged with massive inocula of two bacteria *(Pseudomonas syringae pv. tomato DC3000* and *Xanthomonas axonopodis pv. vesicatoria* 2133-2, hereafter *Pst* and *Xav,* respectively) and one fungal *(Botrytis cinerea, Be)* pathogens respectively. There were three biological replicates per treatment and pathogen, and each biological replicate consisted of three plants. Infection symptoms were recorded at 13, 18 and 24 days after *Pst, Xav* and Be infection, respectively. The experiment was repeated three times with similar results; an example is shown in Figure 35. The legend SlyPep corresponds to *SIPep6.*

Surface application of SIPep6 onto leaves of tomato plants reduced the disease symptoms of bacterial pathogens *Xav* and *Pst,* and fungal pathogen *Bc,* when they were inoculated at high doses (10⁸ cfu/mL and 2.5·105 spores/mL for bacterial and fungal pathogens, respectively). Symptom reduction was observed upon treatment with either 1 or 10 µM peptide. Specifically, both SIPep6 doses provided similar protection against Be and *Pst,* reducing the infection up to 37% and 49%, at 24 and 13 dpi, respectively. SIPep6 strongly protected tomato against the bacterial pathogen *Xav.* At the lowest tested concentration, 1 µM, *Xav* disease symptoms were reduced up to 94% at 18 dpi. Treatment with a ten-fold higher concentration displayed a protective effect as well but to a lesser extent (92%). In comparison with flg15 in the conditions reported to trigger the defence response in tomato and other plant species (Miyata et al., 2006), SIPep6 provided similar protection levels against Be and *Pst.* However, despite 10 µM and 100 µM flg15 being effective in reducing *Be, Pst* and also *Xav* symptoms, 1 µM SIPep6 conferred tomato plants significantly higher protection against this disease (at 18 dpi, the severity values were 3.5% for SIPep6 and 21.9% for flg15, while they were 51% in untreated control plants, Figure 35).

We observed Sys protective effect against all three tested pathogens. Similar to 1 µM SIPep6 (p > 0.05, one-way ANOVA and Tukey's HSD post-hoc test), treatment with either 1 µM or 10 µM Sys dramatically reduced Xav symptoms up to 92% at 18 dpi; and also diminished those from Pst up to 50% at 13 dpi. Pretreatment with 1 µM Sys reduced Bc symptoms up to 33% at 24 dpi, which is similar to treatment with the same concentration of SIPep6 (p > 0.05). With Sys as well as SIPep6, 1 µM doses performed better than higher doses in protecting tomato plants against diverse pathogens.

## Claims

1. A method for determining an application schedule of a plant defence response eliciting agent to control in the field a plant disease caused by one or more infectious agents in one or more plants to be treated with said plant defence response eliciting agent, **characterised in that** it comprises the following steps:
[a] obtaining, for a first time interval *t,* preferably said first time interval *t* consisting of *n* consecutive subintervals *tᵢ* wherein *i* is an integer between 1 and *n,* a meteorological first time series, said first time series comprising data of at least one meteorological parameter *M* over said first time interval *t*, said at least one meteorological parameter *M* being related to a geographical area comprising the area wherein said one or more plants to be treated are located, and preferably said first time series being such that for each subinterval *tᵢ* there is an associated value *Mᵢ* of said at least one meteorological parameter *M ;*
[b] determining an infection risk second time series, said second time series comprising data of an infection risk parameter *IR* over said first time interval *t*, said infection risk parameter *IR* corresponding to the risk of infection by said one or more infectious agents and said infection risk parameter *IR* being based on said at least one meteorological parameter *M* of said first time series obtained in step [b], and preferably said second time series being such that for each subinterval *tᵢ* there is an associated value *IRᵢ* of said infection risk parameter *IR*, said value *IRᵢ* corresponding to the risk of infection by said one or more infectious agents determined for said subinterval *tᵢ*;
[c] determining an optimal application schedule for said plant defence response eliciting agent within said first time interval *t*, said optimal application schedule comprising one or more optimal application time intervals *tₐₚₚ,* within said first interval *t* for said plant defence response eliciting agent to be applied to effectively control said plant disease, wherein
each of said one or more optimal application time intervals *t_{app, i}* are determined by the following steps:
[c1] for each subinterval *tᵢ*, determining whether said infection risk parameter *IRᵢ* is equal or above an infection risk threshold *T(IR)* or not;
[c2] for each subinterval *tᵢ* for which said infection risk parameter *IRᵢ* is equal or above said defined infection risk threshold *T(IR)ᵢ,* determining a corresponding optimal application time interval *t_{app, l}* based on the onset of action *Eᵢ* of said plant defence response eliciting agent, said onset of action *Eᵢ* of said plant defence response eliciting agent corresponding to the time needed by said plant defence response eliciting agent, after being applied to said one or more plants to be treated, to elicit a response in said one or more plants to be treated, and said onset of action *Eᵢ* of said plant defence response eliciting agent being determined based on said at least one meteorological parameter *M* of said first time series obtained in step [b].

2. The method according to claim 1, **characterised in that** it further comprises the step of:
[b1] obtaining a third time series, said third time series comprising data of at least one plant defence response eliciting agent-related parameter *C_{EA}*,
said third time series being such that each subinterval *tᵢ* has an associated value *C_{EA,i}* for said at least one parameter *C_{EA};* and **in that**
in step [c], said onset of action *Eₗ* of said plant defence response eliciting agent and/or said optimal application time points *t_{app, i}* are adjusted depending on said at least one parameter *C_{EA}*.

3. The method according to claim 2, **characterised in that** said parameter C_{EA}, is a C_{EA}, meteorology-dependent parameter *C_{EA,M},* said parameter *C_{EA,M}* corresponding to a parameter related to said plant defence response eliciting agent that depends on said at least one meteorological parameter *M* of said first time series obtained in step [a].

4. - The method according to any one of claims 2 or 3, **characterised in that** said onset of action *Eᵢ*of said plant defence response eliciting agent and/or said optimal application time points *t_{app, i}* are adjusted based on whether said at least one parameter *C_{EA}* is below, equal, or above a defined threshold T(*C_{EA}*).

5. The method according to any one of claims 2 to 4, **characterised in that** said parameter *C_{EA}* is a persistency parameter *P_{EA}* corresponding to a parameter related to the persistency time of said plant defence response eliciting agent on said one or more plants to be treated.

6. The method according to any one of claims 1 to 5, **characterised in that** said at least one meteorological parameter *M* of said first time series obtained in step [a] is
a meteorological parameter measured at said geographical area for said first time interval *t,* preferably for each subinterval *tᵢ*, or
a meteorological parameter predicted at said geographical area for said first time interval *t,* preferably for each subinterval *tᵢ*, or
a meteorological parameter measured at said geographical area for some subintervals *tᵢ*, and a meteorological parameter predicted at said geographical area for the remaining subintervals *tᵢ*.

7. The method according to any one of claims 1 to 6, **characterised in that** said at least one meteorological parameter *M* is selected from the group consisting of temperature, relative humidity, precipitation, and risk of precipitation.

8. The method according to any one of claims 1 to 7, **characterised in that** said first time interval *t* is 7 days and each subinterval *tᵢ* is 1 day.

9. The method according to any one of claims 1 to 8, **characterised in that** said plant defence response eliciting agent comprises or consists of at least one selected from:
- a plant elicitor peptide selected from the group consisting of:
a peptide comprising the amino acid sequence SEQ ID N° 1,
a peptide comprising the amino acid sequence SEQ ID N° 2,
a peptide comprising the amino acid sequence SEQ ID N° 5,
a peptide comprising the amino acid sequence SEQ ID N° 6,
a peptide comprising the amino acid sequence SEQ ID N° 7,
a peptide comprising the amino acid sequence SEQ ID N° 9,
a peptide comprising the amino acid sequence SEQ ID N° 10,
a peptide comprising the amino acid sequence SEQ ID N° 11,
a peptide comprising the amino acid sequence SEQ ID N° 12,
a peptide comprising the amino acid sequence SEQ ID N° 13,
a peptide comprising the amino acid sequence SEQ ID N° 14,
a peptide comprising the amino acid sequence SEQ ID N° 15,
a peptide comprising the amino acid sequence SEQ ID N° 16,
a peptide comprising the amino acid sequence SEQ ID N° 17,
a peptide comprising the amino acid sequence SEQ ID N° 18,
a peptide comprising the amino acid sequence SEQ ID N° 19,
a peptide comprising the amino acid sequence SEQ ID N° 20,
a peptide comprising the amino acid sequence SEQ ID N° 21,
a peptide comprising the amino acid sequence SEQ ID N° 22,
a peptide comprising the amino acid sequence SEQ ID N° 23,
a peptide comprising the amino acid sequence SEQ ID N° 24,
a peptide comprising a sequence with an identity or a similarity of at least 50% to any of said sequences SEQ ID N° 1, SEQ ID N° 2, SEQ ID N° 5, SEQ ID N° 6, SEQ ID N° 7, and SEQ ID N° 9 to SEQ ID N° 24 and that has a plant defence eliciting function;
- a fusion peptide comprising or consisting of
any of said plant elicitor peptides, and
an affinity purification tag sequence located at the N-terminal end of said plant elicitor peptide,
preferably a fusion peptide comprising or consisting of
a plant elicitor peptide comprising any of the amino acid sequences SEQ ID N° 3, SEQ ID N° 4, SEQ ID N° 8, or a peptide comprising an amino acid sequence having an identity or similarity of at least 50% to any of SEQ ID N° 1, SEQ ID N° 2, SEQ ID N° 7, SEQ ID N° 12, and SEQ ID N° 13, and
an affinity purification tag sequence located at the N-terminal end of said plant elicitor peptide; and
- a mixture of any of said plant elicitor peptides and/or any of said fusion peptides.

10. The method according to any one of claims 1 to 9, **characterised in that** said plant disease is bacterial spot and/or **in that** said one or more infectious agents comprises a bacterium of the genus *Xanthomonas,* preferably a bacterium *Xanthomonas arboricola,* more preferably a bacterium *Xanthomonas arboricola pv. pruni.*

11. The method according to any one of claims 1 to 10, **characterised in that** said one or more plants to be treated are plants of the genus *Prunus.*

12. Phytosanitary composition for the control in the field of a plant disease in one or more plants to be treated, **characterised in that it** comprises a plant defence response eliciting agent as defined according to claim 9.

13. Use in the field of a plant defence response eliciting agent as defined in claim 9 or of a phytosanitary composition according to claim 12 for the control in the field of a plant disease in one or more plants to be treated, wherein preferably said plant defence response eliciting agent or said phytosanitary composition is applied following an application schedule determined by a method according to any one of claims 1 to 11, and wherein preferably, said plant defence response eliciting agent or said phytosanitary composition is applied by surface treatment, more preferably by broadcast application and/or foliar spray, or is applied by root treatment, more preferably by irrigation, even more preferably by drip irrigation, or is applied by trunk injection.

14. A method for the control in the field of a plant disease with at least one plant defence response eliciting agent as defined in claim 9 or a phytosanitary composition according to claim 12, **characterised in that** it comprises the steps of
- determining an optimal application schedule of said at least one plant defence response eliciting agent using the method according to anyone of claims 1 to 11; and
- applying said at least one plant defence response eliciting agent or said phytosanitary composition to said one or more plants to be treated at said optimal application time intervals tₐₚₚ according to said optimal application schedule, and
wherein preferably said plant defence response eliciting agent or said phytosanitary composition is applied by surface treatment, more preferably by broadcast application and/or foliar spray, or is applied by root treatment, more preferably by irrigation, even more preferably by drip irrigation, or is applied by trunk injection.

15. A computer program comprising instructions which, when the program is executed by a computer, cause the computer to carry out the method for determining an application schedule of a plant defence response eliciting agent according to the any of claims 1 to 11.
